(19) **Europäisches Patentamt / European Patent Office / Office européen des brevets**

(11) **EP 1 846 923 B1**

(12) **EUROPÄISCHE PATENTSCHRIFT**

(45) Veröffentlichungstag und Bekanntmachung des Hinweises auf die Patenterteilung:
**08.04.2009 Patentblatt 2009/15**

(21) Anmeldenummer: **06706616.7**

(22) Anmeldetag: **03.02.2006**

(51) Int Cl.:
*G11B 7/00* (2006.01)       *G11B 7/24* (2006.01)
*G11B 7/125* (2006.01)     *G11B 7/13* (2006.01)
*G11B 7/135* (2006.01)     *G11B 7/14* (2006.01)
*G01B 9/02* (2006.01)       *G02B 21/00* (2006.01)

(86) Internationale Anmeldenummer:
**PCT/EP2006/000948**

(87) Internationale Veröffentlichungsnummer:
**WO 2006/082067 (10.08.2006 Gazette 2006/32)**

(54) **VERFAHREN UND ANORDNUNG ZUR KONFOKALEN, CHROMATISCHEN, INTERFEROMETRISCHEN, SPEKTROSKOPISCHEN ABTASTUNG FÜR OPTISCHE MEHRLAGEN-DATENSPEICHER**

METHOD AND ASSEMBLY FOR CONFOCAL, CHROMATIC, INTERFEROMETRIC AND SPECTROSCOPIC SCANNING OF OPTICAL, MULTI-LAYER DATA MEMORIES

PROCEDE CONFOCAL INTERFEROMETRIQUE, ENSEMBLE CONFOCAL INTERFEROMETRIQUE POUR DES MEMORIES DE DONNEES OPTIQUES, NOTAMMENT POUR DES MEMOIRES DE VOLUME EN TERAOCTETS, ET UTILISATION D'UNE TELLE MEMOIRE DE DONNEES

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **03.02.2005 DE 102005006723**

(43) Veröffentlichungstag der Anmeldung:
**24.10.2007 Patentblatt 2007/43**

(73) Patentinhaber: **Universität Stuttgart**
**70174 Stuttgart (DE)**

(72) Erfinder:
- **KÖRNER, Klaus**
  **15566 Schöneiche (DE)**
- **BERGER, Reinhard**
  **73730 Esslingen (DE)**
- **DROSTE, Ulrich**
  **14167 Zehlendorf (DE)**
- **KOHLER, Christian**
  **74193 Schwaigern (DE)**
- **OSTEN, Wolfgang**
  **70569 Stuttgart (DE)**
- **PRUSS, Christof**
  **70839 Gerlingen (DE)**

- **RUPRECHT, Aiko**
  **22880 Wedel (DE)**
- **WIESENDANGER, Tobias**
  **69231 Rauenberg (DE)**

(74) Vertreter: **Müller-Boré & Partner**
**Patentanwälte**
**Grafinger Strasse 2**
**81671 München (DE)**

(56) Entgegenhaltungen:
**EP-A- 0 731 459          US-A- 5 565 986**
**US-A- 5 619 371          US-A- 5 784 352**
**US-A- 5 883 875**

- **GUOQIANG LI, PANG-CHEN SUN, PAUL C. LIN, YESHAYAHU FAINMAN: "Interference micrsocopy for three-dimensional imaging with wavelength-to-depth encoding" OPTICS LETTERS, Bd. 25, Nr. 20, 15. Oktober 2000 (2000-10-15), Seiten 1505-1507, XP002386144**
- **J.GARZON R, J.MENESES, G.TRIBILLON, T.GHARBI, A.PLATA: "Chromatic confocal micrsocopy by means of continuum light generated through a standard single-mode fibre" JOURNAL OF OPTIC S A: PURE AND APPLIED OPTICS, Nr. 6, 2004, Seiten 544-548, XP020081462**

**EP 1 846 923 B1**

**Beschreibung**

Die vorliegende Erfindung betrifft ein interferometrisches, konfokales Verfahren, eine interferometrische, konfokale Anordnung für optische Datenspeicher, insbesondere Terabyte-Volumenspeicher und eine Verwendung eines Datenspeichers.

Das Auslesen von Daten von einer DVD kann auch bei modernen Echtzeitapplikationen noch mit einer zu geringen Geschwindigkeit erfolgen. Beispielsweise, wenn mehrere Spielfilme in hoher Bildqualität von einer einzigen DVD gleichzeitig wiedergegeben werden sollen. Außerdem gibt es in zunehmenden Maße Anwendungen, wo auch das Speichervolumen einer 17 GByte DVD bei Weitem nicht ausreichend ist, beispielsweise bei der Video-Archivierung oder Datensicherung im Staatsdienst sowie bei Datenbanken, wo eine sehr hohe Datentransferrate wie benötigt wird.

Die konfokale Technik, auch in Verbindung mit der Interferometrie, ist für die Auslesung optischer Volumenspeicher mit Vielfachschichten (Multi-Layer) gut geeignet, s. a. Stephen R. Chinn und Eric A. Swanson: "Optical Coherence Tomography for High-Density Data Storage" in Handbook of Optical Coherence Tomography, Editoren: Bouma, Brett, E.; Tearney, Guillermo, J.; Marcel Dekker, Inc., New York, Basel, 2002, ISBN-Nummer 0-8247-0558-0, [1] Kapitel 14, S. 385 - 420. Diese Grundlagen sind im US-Patent 5784 352 von Eric A. Swanson und Stephen R. Chinn dargestellt.

Das Auslesen von Daten mittels konfokaler Technik kann in recht guter Näherung beugungsbegrenzt erfolgen. Damit stellt die konfokale Technik einen sehr tragfähigen Ansatz dar, das Speichervolumen optischer Volumenspeicher weiter zu erhöhen. Probleme mit der Signalqualität können jedoch bei sehr vielen übereinander angeordneten Schichten durch die Streuung im Volumen, insbesondere beim Auslesen der tieferen Schichten auftreten. Es gibt einen merklichen Vorteil hinsichtlich Sensitivität, wenn eine Verbindung der konfokalen Technik mit einem interferometrischen Ansatz erfolgt, also ein konfokal-interferometrisches Verfahren eingesetzt wird, s. a. [1], S. 409. Dieser Vorteil gegenüber der rein konfokalen Technik gilt auch allgemein für die Detektion von Streuzentren in einer größeren Tiefe in einem unstrukturierten transparenten Speichermedium.

Ein weiteres Problem bei der Vielfachschichten-Technik stellt die sphärische Aberration im Speichermedium dar, die bei hochaperturigen Festobjektiven den nutzbaren Tiefenbereich im Speichervolumen stark begrenzt, siehe hierzu auch [1], S. 408. Hier wird dargestellt, dass ein Festobjektiv mit einer numerischen Apertur von 0,55 bei einer Wellenlänge von 780 nm trotz Nachfokussierung wegen der sphärischen Aberration nur in einem Tiefenbereich von etwa +/-100 $\mu$m um die mittlere Fokusposition von 1,2 mm bei einer Standard-Polycarbonat-Disk genutzt werden kann, ohne dass eine Signaldegradation durch Wellenfrontdeformationen auftritt. Dies bedeutet, dass wegen des Einflusses der sphärischen Aberration beispielsweise nur etwa 10 Schichten mit guter Signalqualität ausgelesen werden können. Dabei könnte bezüglich der Sensitivität ein konfokal-interferometrisches Verfahren - in [1], S. 409 als OCT-System bezeichnet - bei geeigneter Ausführung des Plattenmediums und Schichtgestaltung durchaus 100 Schichten in der Tiefe auslesen. Dies erfordert dann jedoch zur Kompensation der sphärischen Aberration eine aktive Optik, welche auch als dynamische optische Kompensation bekannt ist. Diese aktive Optik erhöht die Komplexität des Abtastsystems jedoch sehr stark und verschlechtert die zeitliche Dynamik desselben erheblich.

Außerdem ermöglicht der bekannte Ansatz der optischen Datenauslesung mittels konfokalinterferometrischer Verfahren, s. a. [1], S. 386 -389, hier auch als "optical coherence domain reflectometry", bzw. OCT-Technik bezeichnet, stets nur das Auslesen einer einzigen Schicht, bzw. Datenspur zu einem Zeitpunkt, nämlich das Auslesen der Schicht, auf welche die elektromagnetische Strahlung zur Auslesung gerade fokussiert wird. Damit ist kein simultanes Auslesen mehrerer Datenspuren zu einem Zeitpunkt möglich und somit die Auslesegeschwindigkeit angesichts der sehr großen Datenmenge eines lateral nahezu beugungsbegrenzt speichernden Vielfachschichten-Datenträgers doch sehr gering.

Die Weißlicht-Interferometrie mit spektraler Auswertung, auch als Fourier-Domain OCT oder Spektral-Interferometrie bekannt, s. a. M. W. Lindner, P. Andretzky, F. Kiesewetter und G. Häusler: Spectral Radar: Optical Coherence tomography in the Fourier Domain in [1], S. 335-345, ist wegen der vergleichsweise guten Dynamik der detektierbaren Signale ebenfalls viel besser als die ausschließlich konfokale Technik geeignet, eine größere Anzahl von Speicherschichten in der Tiefe auszulesen. Das Problem, bezüglich der Auslesung optischer Volumenspeicher mittels Spektral-Interferometrie, stellt die vergleichsweise geringe numerische Apertur des Fokussierobjektivs dar. Bei Anwendung der Spektral-Interferometrie für die optische Datenauslesung aus einem Speichermedium würde dies zu lateral vergleichsweise großen Dots oder Pits im Speichermedium führen und damit zu einer deutlich geringeren Speicherdichte pro Schicht im Vergleich zur Standardtechnik. Damit ist der wirtschaftliche Nutzen dieses bekannten Ansatzes für die optische Datenauslesung eher begrenzt.

Unabhängig davon wurde auch bereits vorgeschlagen, allein mittels hochaperturiger konfokaler Technik eine größere Anzahl von Speicherschichten gleichzeitig in der Tiefe und auch lateral aus einem Speichervolumen nahezu beugungsbegrenzt auszulesen. Es wird jedoch mittels rein konfokaler Technik bei weitem nicht die Sensitivität der konfokalinterferometrischen Verfahren erreicht, die nach [1], S. 409 um zwei Größenordnungen besser ist als die der rein konfokalen Technik.

Ansätze zur chromatisch-konfokalen Mikroskopie wurden bereits von H. J. Tiziani und H.-M. Uhde im Fachartikel Three-dimensional image sensing by chromatic confocal microscopy in Applied Optics, Vol. 33, No. 1. April 1994, S.

1838 bis 1843 dargestellt. Mit diesem Ansatz kann auf den mechanischen Tiefen-Scan verzichtet werden. Bei diesen Applikationen stand die Auslesung optischer Datenträger nicht im Vordergrund.

In der Veröffentlichung "Accurate fiber-optic sensor for measurement of the distance based on white-light interferometry with dispersion" von Pavel Pavlicek und Gerd Häusler in ICO Tokyo, Paper-Nr. 15B3-1 vom 15.7.2004 [12] wird eine Anordnung beschrieben, bei der in einer Faser im Referenzarm eines Interferometers mittels Dispersion ein über der Wellenzahl intensitätsmoduliertes Signal erzeugt wird. Der Objektabstand kann jedoch auch hier nur innerhalb der wellenoptischen Schärfentiefe des Sensorkopfes, die durch die numerische Apertur des Objektivs desselben bestimmt ist, ermittelt werden und ist somit insbesondere für eine hohe numerische Apertur sehr begrenzt.

Es wurde von K. Körner, P. Lehmann, A. Ruprecht und W. Osten auch eine chromatisch-konfokale Anordnung zur Auslesung optischer Datenträger vorgeschlagen. Diese weist jedoch noch Verbesserungspotenzial hinsichtlich der Sensitivität der Anordnung auf.

Holografische Verfahren erlauben zwar gespeicherte Informationen aus einem Volumen auszulesen, weisen i.a. eine nicht beugungsbegrenzte Speicherdichte auf und werden deshalb hier nicht weiter beachtet, s.a. [1], S. 386.

US 5 565 986, benutzt zur Definition der Präambel der zweiteiligen Form, offenbart eine Interferometervorrichtung mit einer multiwellenlängen Lichtquelle und einer Fokussiereinrichtung, welche ausgelegt ist, Licht der Lichtquelle gleichzeitig an zwei verschiedene Regionen eines Objekts zu fokussieren, wobei das fokussierte Licht von dem Objekt reflektiert wird und mit das von dem Objekt reflektierte Licht mit reflektiertem Licht verglichen wird, das von einem Referenzobjekt reflektiert wird, verglichen wird, indem Wellenlängenunterschiede zwischen dem vom dem Objekt reflektierten Licht und dem von dem Referenzobjekt reflektierten Licht festgestellt werden und somit eine spektroskopische Abbildung des Objekts hergestellt wird.

Das Ziel der Erfindung besteht darin, für die gewerbliche Nutzung optische Vielfachschichten-Datenträger, also im Basismaterial transparente Volumendatenträger mit sehr hoher Speicherdichte und Speicherkapazität, beispielsweise auch im TeraByte-Bereich, vergleichsweise schnell auslesen zu können. Ziel ist dabei das Auslesen von Volumendatenträgern mit einer lateralen Speicherdichte möglichst nahe an der Begrenzung durch die Beugung elektromagnetischer, Wellen und für den Einsatz möglichst hochaperturiger Fokussieroptik, beispielsweise mit einer numerischen Apertur von mindestens 0,5. Auch soll in vertikaler Richtung eine vergleichsweise hohe Speicherdichte erzielt werden können, indem die Datenschichten durch die Anwendung der Erfindung vergleichsweise eng beieinander liegen. Dies soll durch den Einsatz von Fokussieroptik mit einer hohen numerischen Apertur möglich werden. Dabei soll mit dem erfinderischen Ausleseverfahren beim Auslesen des Volumendatenträgers ein möglichst großer Datenfluss erreicht werden können, beispielsweise zur simultanen Wiedergabe von mehreren Spielfilmen in sehr hoher Bildqualität.

Das Ziel der Erfindung besteht weiterhin darin, eine vergleichsweise große Robustheit gegenüber Vibrationen beim Auslesevorgang und kleineren Fertigungsfehler des Datenträgers zu erreichen. Das Ziel besteht weiterhin darin, insbesondere zum Erreichen einer hohen Auslesegeschwindigkeit und vergleichsweise geringer Herstellungskosten sowie einer hohen Produktlebensdauer auf aktive Optik zu verzichten, zumindest im Auslesevorgang.

Ein weiteres Ziel besteht darin, auch Datenträger auslesen zu können, die eine sehr gute Langzeitstabilität der Datenspeicherung aufweisen. Diese verfügen dann eher über ein geringeres Speichervermögen. Deshalb soll auch die Anwendung des Verfahrens auch bei Speichenmaterialien ermöglicht werden, die bei Verschleiß, Zerstörung oder Verwitterung der Oberfläche des optischen Datenträgers bei Bedarf eine Nachpolitur der optischen Kontaktfläche desselben ermöglichten. Es sollen bei Anwendung der Erfindung beispielsweise auch mittels Femto-Sekunden-Laser "gebrannte" Dots, in verschiedenen Tiefen des Speichervolumens gelesen werden können, beispielsweise auch Dots in hochfesten, anorganischen und transparenten Materialien.

Damit ist also im besonderen die erfinderische Aufgabe zu lösen, beim Auslesen von Daten aus einem optischen Datenspeicher auch in wesentlich mehr als zwei Schichten in der Tiefe oder in verschieden tiefen Volumenbereichen gleichzeitig optische Merkmale sehr schnell und mit hoher Zuverlässigkeit zu erfassen.

Weiterhin ist also auch die erfinderische Aufgabe zu lösen, eine große Robustheit im Auslesevorgang dadurch zu erreichen, dass das Auslesesystem, also der optische Tastkopf, zum Zeitpunkt des Auslesens auch bei einer gewissen Fehllage desselben in der Tiefe noch vergleichsweise zuverlässig Daten liefern kann.

Die Anwendung der Erfindung wird vor allem für die optische Auslesung von Nur-Lese-Speichern (read only memories) gesehen, ist aber keinesfalls auf diese Applikation beschränkt.

Dabei kann die Erfindung sowohl für ein vorab strukturierten Speichervolumen, also eines mit einer definierten Anzahl von Speicherschichten, beispielsweise 8, 16, 64 oder 128 Speicherschichten, aber auch für ein räumlich eher unstrukturiertes transparentes Volumen des Speichers angewendet werden.

Eine Datenschicht, die mittels erfinderischer Anordnung ausgelesen werden soll, kann beispielsweise mit Pits mit einer Tiefe, die einem optischen Gangunterschied von einem Viertel der verwendeten Wellenlänge entspricht, aufgebaut sein. Dies ist Standard in modernen optischen Datenspeichern, s. a. [1], S. 388. Es kann sich aber bei den Datenpits auch um mikroskopisch kleine Bereiche mit Reflexionsgradunterschieden im transparenten Speichermaterial durch eine Änderung des Brechungsindexes oder auch um mikroskopisch kleine Streuzentren oder Reflexionszentren handeln, die optisch erfasst werden können.

Das hier vorgeschlagene, erfinderische, interferometrische, konfokale Verfahren für optische Datenspeicher vorzugsweise zum Lesen optischer Datenspeicher, insbesondere Terabyte-Volumenspeicher und auch zur simultanen Auslesung mehrerer Kanäle verbindet erfindungsgemäß die bekannte, vorzugsweise herkömmliche chromatisch-konfokale Technik zur Tiefenerfassung oder 3D-Erfassung, auch als chromatisch-konfokale Mikroskopie (CCM) bezeichnet, bei der eine Längsaufspaltung der Foki im Speichervolumen durch eine chromatische Längsaberration erfolgt, mit der bekannten, vorzugsweise herkömmlichen Weißlicht-Interferometrie (WLI) mit vorzugsweise herkömmlicher spektraler Analyse, auch als Fourier-Domain-WLI, Fourier-Domain OCT oder auch als Spektral-Interferometrie, insbesondere Zweistrahl-Interferometrie bekannt.

Das erfinderische, interferometrische, konfokale Verfahren für optische Datenspeicher, insbesondere Terabyte-Volumenspeicher und auch zur simultanen Auslesung mehrerer Kanäle wird im Weiteren als chromatisch-konfokale Spektral-Interferometrie (chromatic confocal spectral interferometry, CC-SI) oder auch chromatisch-konfokale Zweitstrahl-Spektral-Interferometrie bezeichnet. Dabei erfolgen der Einsatz einer im Vergleich zu einem Laser eher breitbandigen Quelle elektromagnetischer Strahlung sowie der Einsatz eines Interferometers und eines Empfängers elektromagnetischer Strahlung. Dem Interferometer ist erfindungsgemäß ein Spektrometer nachgeordnet. Dieses ist dem Empfänger elektromagnetischer Strahlung vorgeordnet.

Bei dem erfinderischen, interferometrischen, konfokalen Verfahren für optische Datenspeicher, insbesondere Terabyte-Volumenspeicher und auch zur simultanen Auslesung mehrerer Kanäle optischer Volumenspeicher kann eine einzige Multiwellenlängen-Quelle elektromagnetischer Strahlung oder auch eine größere Anzahl von Multiwellenlängen-Quellen eingesetzt werden. Die Multiwellenlängen-Quellen können punktförmig ausgebildet sein, beziehungsweise es wird mittels Fasern oder Mikroblenden eine oder mehrere punktförmige Multiwellenlängen-Quellen dargestellt. Es ist ein Interferometer angeordnet. Mit einem Fokussier-System erfolgt die Beleuchtung des Speichermediums, wobei das Fokussier-System Bestandteil des Interferometers ist. Außerdem erfolgt mit dem Fokussier-System auch eine mikroskopische Abbildung des Inneren des Volumenspeichers, beziehungsweise des Speichermediums. Das Verfahren kann im Auflicht oder auch im Durchlicht durchgeführt werden. Bei der weiteren Beschreibung steht der Auflichtansatz im Vordergrund. Die Abbildung des Inneren des Volumenspeichers, beziehungsweise des Speichermediums erfolgt auf einen gerasterten Empfänger elektromagnetischer Strahlung, der eine hohe zeitliche Auflösung besitzt, wobei dem gerasterten Empfänger ein Spektrometer vorgeordnet ist. Dieses Spektrometer kann fasergekoppelt sein.

Erfindungsgemäß wird also die chromatisch-konfokale mikroskopische Technik mit der spektralen Zweistrahl-Interferometrie verfahrensmäßig verbunden, d.h. ein chromatisch-konfokales mikrospopisches Verfahren und ein spektrales Zweistrahl-Interferometrieverfahren werden miteinander gekoppelt. Dabei wird im Interferometer bei einem optischen Gangunterschied ungleich null gearbeitet, d.h. das Interferometer derart betrieben, daß ein optischer Gangunterschied der interferierenden elektromagnetischen, Strahlung von Null verschieden ist. Bei einem reflektierenden Bereich oder Dot im Speichermedium wird mindestens ein Wavelet über der spektralen Achse erzeugt. Der Begriff "Dot" und der Begriff "reflektierender Bereich" werden vorzugsweise im wesentlichen gleichbedeutend verwendet. Dabei wird unter Wavelet hier ein Signal verstanden, welches periodisch ist, wobei sich die Frequenz oder die Periodenlänge auch ändern kann, und das Signal über eine obere Einhüllende verfügt, also über seinen Verlauf moduliert ist. Dabei kann die obere Einhüllende des Signals ein Maximum aufweisen.

In anderen Worten betrifft ein Aspekt der vorliegenden Erfindung ein Verfahren zum Lesen eines Datenspeichers, insbesondere eines Terabyte Volumenspeichers mit den Schritten:

Einstrahlen elektromagnetischer Strahlung zumindest einer Multiwellenlängen Quelle auf den Datenspeicher,

Abbilden reflektierter oder transmittierter elektromagnetischen Strahlung auf einem gerasterten Empfänger, nach Durchgang der elektromagnetischen Strahlung durch

ein Zweistrahl-Interferometer,
ein chromatisch-konfokales Mikroskop und
ein Spektrometer, wobei

in dem Interferometer ein optischer Gangunterschied ungleich Null vorliegt und

bei einem reflektierten Bereich bzw. einem Dot im Datenspeicher mindestens ein Wavelet über der spektralen Achse des Spektrometers erzeugt wird.

Vorzugsweise wird bei dem interferometrischen, konfokalen Verfahren für optische Datenspeicher, insbesondere Terabyte-Volumenspeicher die Signalamplitude von Wavelets zur Gewinnung digitaler Daten ausgewertet. Vorzugsweise ist auch die Phase oder die Halbwertsbreite der Einhüllenden auswertbar. Dies erfordert jedoch ein aufwendigeres Rechenverfahren als die Berechnung der Signalamplitude von Wavelets, wobei letztere nur näherungsweise berechnet werden muss, um zu entscheiden, ob eine logische Null oder eine logische 1 vorliegt. Deshalb wird die Berechnung der Signalamplitude von Wavelets hier favorisiert.

Vorzugsweise werden bei dem interferometrischen, konfokalen Verfahren für optische Datenspeicher, insbesondere Terabyte-Volumenspeicher logische Abtastfenster, die aus den jeweils ein Wavelet auswertenden Sensorelementen des Spektrometers - also auf der Spektrometerachse - gebildet. Diese Wavelets können durch äußere Einwirkungen auf den Abtastkopf "auf der Spektrometerachse von einem Datenerfassungszeitpunkt zum nächsten driften oder sogar springen". Vorzugsweise werden deshalb diese logischen Abtastfenster im Auslesevorgang diesen driftenden Wavelets hochdynamisch elektronisch nachgeführt. Dabei kann hochdynamisch eine Trendanalyse für die Verschiebung erfolgen. Dies ist möglich, da das logische Abtastfenster etwas breiter ausgelegt ist als für die Auswertung der Wavelets unbedingt erforderlich. Das ermöglicht selbst bei auf der Spektrometerachse "springenden Wavelets", beispielsweise infolge eines heftiges Stoßes auf das Gesamtsystem mit einer Beschleunigungskomponente in der Tiefe, logische Abtastfenster nachzuführen, um eine sichere Auslesung der Daten aus dem Speichervolumen zu erreichen. Da diese Nachführung ohne jede mechanische Komponente erfolgen kann, ist dieser Ansatz den mit mechanisch stellenden Komponenten arbeitenden Ansätzen weit überlegen.

Es erfolgt hier bei Anwendung der erfinderischen chromatisch-konfokalen Spektral-Interferometrie für optische Datenspeicher, insbesondere Terabyte-Volumenspeicher, mittels optischen Fokussier-Systems also sowohl eine Beleuchtung als auch eine mikroskopische Abbildung des Inneren des im Basismaterial transparenten Volumenspeichers, also in verschiedenen Tiefen gleichzeitig. Mittels einer chromatischen Längsaberration im optischen Fokussier-System des Abtastkopfes erfolgt eine Separierung der Foki vorzugsweise und zumindest näherungsweise entlang einer Geraden im Volumen des transparenten Datenspeichers. Es werden also durch chromatische Längsaberration, beziehungsweise chromatische Tiefenaufspaltung, in unterschiedlichen Tiefen des Speichermediums Foki ausgebildet. Dabei ist für jeden Fokus jeder beliebigen Wellenlänge im genutzten Spektralbereich, die sphärischen Aberration zu einem Minimum gemacht, so dass für den Fokusfleck in jeder vom Design des Abtastsystems berücksichtigten Tiefe des Speichermediums in guter Näherung eine beugungsbegrenzte Abbildung besteht.

Dabei kann das Interferometer vom Michelson-, bzw. vom Linnik-Typ oder auch vom Mach-Zehnder-Typ sein. Das Zweistrahl-Interferometer kann aber auch als zumindest teilweise ausgebildetes Common-path- Interferometer gestaltet sein. Dann kann das Zweistrahl-Interferometer also auch als ein Fizeau- oder auch ein Mirau-Interferometer ausgebildet sein.

Der Datenträger kann dabei zum Abtastkopf eine Relativbewegung mit eher großer Geschwindigkeit aufweisen, beispielsweise wie bei hochtourig laufenden Speicherplatten.

Es ist aber auch möglich, hinsichtlich Volumen und Datenmenge vergleichsweise sehr kleine Volumenspeicher aus verschleißfestem, chemisch hochbeständigem, anorganischem Material zu gestalten.

Diese können insbesondere zur langzeitstabilen Identifikation von Objekten oder von Tieren dienen. Diese Volumenspeicher - weisen beispielsweise zur Langzeitspeicherung von Namen-Herkunfts- und Geburtsdaten sowie Buchstaben- oder Nummernschlüsseln — vorzugsweise eine in der Tiefe eindeutig definierte Anzahl von dichtgepackten, teiltransparenten Schichten auf, wobei dem Vorhandensein einer Schicht eine logische 1 zugeordnet ist und dem Fehlen einer Schicht eine logische 0. Damit ist beispielsweise das Speichern von einer Datenmenge von 16 Byte langzeitstabil möglich.

Bei Tieren können auch mehrere Volumenspeicher im Zahn- oder Skelettbereich als unsichtbare, nahezu unzerstörbare und unverlierbare Implantate angeordnet sein. Diese Implantate können auch mit einer Versiegelung ausgebildet sein.

Beim Auslesen dieses Volumenspeichers führt der Abtastkopf nur eine mikroskopisch kleine laterale oder auch gar keine Relativbewegung zum Volumenspeicher aus. Letzteres ist möglich, wenn vorzugsweise in jeder Tiefe des Volumenspeichers jede Schicht im Extremfall nur ein Bit Information tragen soll. Der Vorteil ist hierbei die nach der optischen Ankopplung eines miniaturisierten Abtastkopfes besonders schnelle Identifikation mit vergleichsweise einfachen Mitteln, beispielsweise im Vergleich zu einer DNA-Analyse. Die optische Ankopplung des Abtastkopfes an das Speichermedium kann auch mittels Immersionsflüssigkeit erfolgen, um die Anforderungen hinsichtlich der Rauheit der Grenzfläche des Speichermediums stark zu reduzieren.

Weiterhin kann vorzugsweise eine optische Markierung des Endstückes vorzugsweise von Multimode-Fasern, beispielsweise aus Quarz mittels lasergebrannter Dots in der Tiefe von einigen 10 $\mu$m, die durch einen Femto-Sekunden-Laser erzeugt wurden, erfolgen. Dabei wird die Transmission der Faser nur unwesentlich beeinflusst.

Weiterhin kann im optischen Fokussier-System des optischen Abtastkopfes die chromatische Längsaufspaltung der Foki im Objektraum in verschiedener Art und Weise mit einer im Optikdesign des Fokussier-Systems exakt quantifizierten chromatischen Längsaberration erfolgen:

Erstens durch eine spezielle chromatische Ausbildung einer rein dispersiven Fokussier-Optik, oder zweitens durch eine dispersive Fokussier-Optik mit eher geringer chromatischer Längsaberration, jedoch zusätzlich mit mindestens einem diffraktiv-optischen Element, also durch ein Hybridsystem, wobei das diffraktiv-optische Element in einer von null verschiedenen Beugungsordnung genutzt wird, oder

drittens durch die Ausbildung der Fokussier-Optik als rein diffraktives System wobei auch hier das diffraktiv-optische Element in einer von null verschiedenen Beugungsordnung genutzt wird.

Dabei ist die Größe der chromatischen Längsaberration der Fokussier-Optik des für die Datenauslesung genutzten Wellenlängenbereiches so eingestellt, dass eine Tiefenaufspaltung der Foki durchgeführt wird, die mindestens der gewünschten Abtasttiefe im Volumen des Datenspeichers entspricht. Darüber hinaus wird der benutzte Spektralbereich der spektralen Auflösung des verwendeten Spektrometers angepasst. Der Vorteil des Prinzips der chromatischen Längsaberration oder Längsaufspaltung der Fokussier-Optik besteht darin, dass auch bei einer Verschiebung des Abtastkopfes in der Tiefe bei einem Stoß auf das System, dennoch Licht zum Zeitpunkt nach dem Stoß - jedoch mit etwas anderer Wellenlänge als vor dem Stoß - einen Fokus scharf auf einer Datenschicht ausbilden kann. Die Auswerteprozessoren, die vorzugsweise das Licht aller Wellenlängen im genutzten Spektralbereich auswerten, erkennen diesen Wechsel der Wellenlänge des fokussierten Lichtes.

Licht wird hier in der Schrift stets im weitgefassten Sinn von elektromagnetischer Strahlung im UV-, VIS- oder Infrarotbereich verwendet.

Damit gibt es im Abtastsystem stets Licht bestimmter Wellenlängen, welches gerade digital weiterverarbeitet wird und Licht bestimmter Wellenlängen, welches zu einem Zeitpunkt gerade nicht weiterverarbeitet wird.

Das diffraktiv-optische Element kann dabei vorzugsweise als positive oder negative Zonenlinse ausgebildet sein. Es gibt technische Argumente für beide Varianten. Langwelliges Licht durchdringt beispielsweise ein Speichermaterial meist etwas besser. Dieser Grund spricht für eine negative Zonenlinse. Dagegen wird kurzwelliges Licht an kleinen Öffnungen weniger durch Beugung beeinflusst, kann also auch tiefergelegene Schichten im Speichermaterial gut erreichen. Dies spricht mehr für eine positive Zonenlinse.

Die diffraktiv-optische Zonenlinse kann auch durch einen Spatial Light Modulator (SLM) erzeugt werden, dessen Brechkraft variabel und rechnergesteuert, also vorbestimmt, eingestellt werden kann.

Um mehrere Spuren lateral in einer Schicht gleichzeitig auslesen zu können, ist die Zonenlinse vorzugsweise in der Fourier-Ebene des Fokussier-Objektivs angeordnet, wo sich auch die Pupille des optischen Fokussier-Systems befindet, wodurch sich im Speichervolumen ein telezentrischer Strahlengang und damit ein von der Wellenlänge unabhängiger Abbildungsmaßstab ergibt. Dies ist für das Auslesen von Schichten verschiedener Tiefe von großem Vorteil und stellt auch die praktische Voraussetzung dar, sowohl mehrere nebeneinander liegende Schichten als auch mehrere Schichten in der Tiefe gleichzeitig auslesen zu können.

Die für die Interferenz jeweils benötigte kohärente Referenzwelle wird vorzugsweise mittels Referenzstrahlengang eines fasergekoppelten Michelson-Interferometers, eines fasergekoppelten Linnik-Interferometers oder auch eines Mach-Zehnder-Interferometers gewonnen.

Die Nutzung des Mach-Zehnder-Interferometers gestattet die Verwendung des zweiten Interferometerausganges, der zumindest näherungsweise gegenphasig arbeitet. So kann durch Subtraktion der mit den beiden Interferometerausgängen gewonnenen Signale die Signalamplitude verdoppelt und der Gleichanteil eliminiert werden. Dies verbessert das Signal-Rausch-Verhältnis und damit die Zuverlässigkeit der Datenauswertung.

Dabei sind im Referenzstrahlengang des Interferometers dem Faserende vorzugsweise ein miniaturisierter Kollimator und ein Retroreflektor nachgeordnet. So kann in einem ersten Fall durch einmaliges Verschieben des Retroreflektors bei der Fertigung des Abtastkopfes der benötigte optische Gangunterschied des Interferometers abgestimmt werden. Dieser Retroreflektor ist vorzugsweise als miniaturisierter, in der Regel glasloser Tripelspiegelreflektor ausgebildet. Der Kollimator muss gut achromatisiert sein. In diesem Fall können alle Schichten gleichzeitig ausgelesen werden, beispielsweise 16 Schichten.

Reflektierende Bereiche einer Datenschicht liefern also auswertbare Wavelets, während Pits mit einer Vertiefung, die einem optischen Gangunterschied von einem Viertel der verwendeten Wellenlänge entspricht, keine Wavelets liefern. Ausgewertet wird also vorzugsweise die Signalamplitude des Wavelets oder ein Wert, der sich aus der Signalamplitude abgeleitet, und nicht die Phase des Wavelets. Mittels einer Schwelle für die errechnete Signalamplitude A oder einem Wert, der sich aus derselben ableitet, wird zu 1 oder 0 entschieden. Dabei wird wegen der konfokalen Diskriminierung jedoch nur Licht, bzw. elektromagnetische Strahlung, zu einer digitalen Information ausgewertet, das oder die einen Fokus bildet, der sich jeweils im wellenoptischen Schärfentiefebereich, der symmetrisch eine Datenschicht umgibt, befindet. Licht von Wellenlängen, die einen Fokus bilden, der mehr als die wellenoptische Schärfentiefe von einer Datenschicht entfernt liegt, wird von der Verarbeitung zu digitalen Daten konsequent ausgeschlossen.

Dabei kann durch die Verrechnung von fünf Intensitäten $I_1$ bis $I_5$ aus direkt benachbarten Sensorelementen, die eine Phasendifferenz von zumindest näherungsweise 90° zueinander aufweisen zum Beispiel die folgende, bekannte Gleichung zur Bestimmung der Signalamplitude A, verwendet werden:

$$A = \sqrt{\left(I_1 - 2I_3 + I_5\right)^2 + \left(2I_2 - 2I_4\right)^2} \, . \qquad (1)$$

## EP 1 846 923 B1

Andere Gleichungen zur Bestimmung der Signalamplitude A sind bekannt und ebenfalls anwendbar. Diese Berechnung der Signalamplitude A kann mittels Hardware-Prozessoren, die parallel auf die Sensorelemente zugreifen, extrem schnell ausgeführt werden. Zur weiteren Beschleunigung der Berechnung können anstelle der Wurzelausdrücke auch die Beträge der Klammerinhalte addiert werden, die zumindest näherungsweise den Wert für die Signalamplitude A liefern.

Im einfachsten Fall können zum Erkennen eines Wavelets auch die Differenzen der Signale direkt nebeneinander liegender Sensorelemente einer Spektrometerzeile ausgewertet werden. Überschreiten diese Differenzen mehrfach eine Schwelle, wobei auch eine Mittelwertbildung dieser Signale möglich ist, liegt ein Wavelet vor. Dieses entsteht als Ergebnis einer Reflexion an der Schicht, und es wird beispielsweise das Vorhandensein eines Wavelets als logische 1 erkannt.

Die Signalamplitude kann jedoch auch über eine größere Anzahl von Intensitäten aus direkt benachbarten Sensorelementen mittels FFT errechnet werden, wobei die FFT vorzugsweise stückweise über dem Spektralbereich ausgeführt wird, nämlich dort, wo ein Wavelet erwartet wird und das auf der Spektrometerzeile ausgewertete Stück vorzugsweise maximal etwa dem halben Abstand zwischen zwei Wavelets entspricht. Auch Sub-Nyquist-Verfahren sind zur Berechnung der Signalamplitude anwendbar, da die erwartete Frequenz zumindest näherungsweise bekannt ist.

Bei einem sehr hochaperturigen Fokussierobjektiv, beispielsweise mit einer numerischen Apertur von 0,8 und einer besonders großen Anzahl von übereinander angeordneten Schichten im Speichervolumen, beispielsweise bei 128 Schichten, kann die sich stark ändernde Periodizität über der Wellenlänge in den Wavelets ein erhebliches Problem für die simultane Detektion derselben darstellen. Andererseits genügt in der Regel die simultane Auswertung von beispielsweise 4, 8 oder 16 Schichten, die dann ein Schichtenpaket darstellen. Dabei können zusätzlich auch mehrere nebeneinander liegende Schichten abgetastet werden, um einen besonders großen Datenfluss zu ermöglichen.

In diesem zweiten Fall wird der Retroreflektor in seiner axialen Position feinfühlig regelbar ausgebildet, um den optischen Gangunterschied im Interferometer stets etwas von null verschieden einzustellen im Bezug auf die Tiefe der Schichten des ausgewählten Paketes. Entsprechend dem gewünschten Schichtenpaket wird also durch die Regelung eine axiale Position des Retroreflektors angefahren, die zu einer gut auswertbaren Frequenz über der Wellenlänge im Wavelet führt, beispielsweise wenn die Phasendifferenz zwischen zwei - von direkt benachbarten Sensorelementen abgetasteten Bereichen - des Wavelets zumindest näherungsweise 60-120 Altgrad beträgt. Da unterschiedliche Schichtenpakete bei der Erfindung stets auch einen unterschiedlichen Wellenlängenbereich aufweisen, kann mit dem Wechsel der Position des Retroreflektors auch eine andere Lichtquelle eingeschaltet werden, also beispielsweise eine andere Superlumineszenz-Diode (SLD), die zu einer schaltbaren Multi-SLD-Lichtquelle gehört. Dabei deckt das Spektrum der jeweils eingeschalteten SLD den benötigten Bereich für das Paket voll ab. Dieser erfinderische Ansatz mit dem axial nachgeführten Retroreflektor besitzt großes Potenzial für die Datenauslesung, um eine besonders große Anzahl von Schichten in der Tiefe auszulesen, da die axiale Nachführung des Retroreflektors stets eine gute Anpassung der Frequenz der Wavelets über der Wellenlänge an die Auflösung des Spektrometers gestattet.

Es ist vorzugsweise auch möglich, dass die jeweils benötigte kohärente Referenzwelle aus einer Wellenfront, die beim Durchgang oder der Reflexion in der nullten Beugungsordnung an der diffraktiv-optischen Zonenlinse entsteht, gebildet wird. Damit kann ein Common-path-Strahlengang erreicht werden. Dabei ist dieser Zonenlinse eine zumindest teilweise reflektierende Referenzspiegelfläche im Common-path-Strahlengang zugeordnet, die zur Reflexion der zumindest näherungsweise gut fokussierten Referenzwellen aller Wellenlängen dient. Der Referenzstrahlengang ist chromatisch ausgebildet. Das bedeutet, dass der dispersive Teil des Fokussier-Systems vorzugsweise gut achromatisiert sein muss. Dieser Ansatz ist sehr kompakt und volumensparend, ist jedoch für eine eher geringere Anzahl von Schichten und für eine eher nicht extrem hohe numerische Apertur wegen der Probleme mit der Eliminierung der sphärischen Aberration im Common-path-Strahlengang sowohl für Objekt- als auch Referenz geeignet. Beispielsweise kann hierbei ein Optimum für nur 16 Schichten im Speichervolumen und eine numerische Apertur von etwa 0,55 gegeben sein.

Bei Ausbildung eines diffraktiv-optischen Systems mit einer, zwei oder mehr Zonenlinsen zur chromatischen Längsaufspaltung in einer vergleichsweise großen Pupille des Fokussier-Systems, die vorzugsweise in der Fourier-Ebene desselben angeordnet ist, kann auch eine höhere numerische Apertur als 0,55 für das Fokussier-System erreicht werden. In diesem Fall muss jedoch mittels diffraktiv-optischen Systems in der Pupille für den chromatischen Strahlengang eine hinreichend gute Korrektur der sphärischen Aberration, auch als Öffnungsfehler bekannt, erfolgen - und dies für den gesamten genutzten Spektralbereich. Dabei bilden sich durch die vorbestimmt erzeugte chromatische Längsaberration, beziehungsweise die chromatische Tiefenaufspaltung, die Foki in unterschiedlichen Tiefen des Speichermediums aus, wobei für jeden Fokus jeder beliebigen Wellenlänge im genutzten Spektralbereich, die sphärischen Aberration ein Minimum aufweist, so dass für den Fokusfleck in jeder vom Design des Abtastsystems berücksichtigten Tiefe des Speichermediums in guter Näherung eine beugungsbegrenzte Abbildung besteht.

Weiterhin wird im optischen System mittels bündelbegrenzender Mittel stets eine konfokale Diskriminierung für die aus dem Speichermedium kommenden Wellenfronten durchgeführt, um Übersprechen von anderen Schichten zu vermeiden. Das kann durch das Ende einer Monomode-Faser oder Mikroblenden geschehen.

Weiterhin werden vorzugsweise bei dem erfinderischen, interferometrischen, konfokalen Verfahren für optische Datenspeicher, insbesondere Terabyte-Volumenspeicher Wavelets erzeugt, die in ihrer Form und Frequenz beeinflusst sind, indem in mindestens einem Arm des Interferometers der optische Gangunterschied wellenlängenabhängig gemacht ist. Dies ist von großem Vorteil für eine schnelle Auswertung der Wavelets auf der Spektrometerachse, insbesondere dann, wenn sehr viele Schichten in der Tiefe auszuwerten sind. In diesem Fall ändert sich bei einem Interferometer ohne wellenlängenabhängige Gangunterschiedsanpassung die Form und Frequenz der Wavelets wegen dem vergleichsweise großen Tiefenbereich vergleichsweise stark, beispielsweise um mehr als 500 $\mu$m. Dies kann zu einer für die schnelle Auswertung ungeeignet großen Variation der Frequenz der Wavelets führen. Die Spektrometerzeile müsste dann Sensorelemente mit variablem Abstand aufweisen oder es wird eine sehr große Anzahl von Sensorelemente benötigt, die wiederum eine extrem schnelle Auswertung aufwendiger machen. Die Wellenlängenabhängigkeit über dem Gangunterschied wird so eingestellt, dass diese mit der jeweiligen Wellenlänge eine sich insgesamt wenig ändernde Variation der Frequenz der Wavelets auf der Spektrometerachse, beziehungsweise Spektrometerzeile ergibt. Beispielsweise werden vorzugsweise so jeder Periode unter der Einhüllenden des Wavelet, 3 bis 6 Sensorelemente zugeordnet. Bei einer Sub-Nyquist-Auswertung und einem im Interferometer optimierten wellenlängenabhängigen Gangunterschied können auch vorzugsweise rechnerisch 4/3 Sensorelemente jeder Periode unter der Einhüllenden des Wavelets zugeordnet sein, was zu einer vergleichsweise geringen Anzahl von Sensorelementen führt. Dabei sollten jedoch die Sensorelemente einen Füllfaktor in Richtung der Spektrometerachse von höchstens 50% aufweisen, um eine hohe Signalmodulation zu erreichen, was eine nicht effiziente Nutzung der eingesetzten Lichtenergie bedeutet.

Weiterhin werden beim erfinderischen interferometrischen, konfokalen Verfahren für optische Datenspeicher, insbesondere Terabyte-Volumenspeicher, vorzugsweise Wavelets mit Form- und Frequenzanpassung erzeugt. Dies bedeutet: Für Licht unterschiedlicher Wellenlängen muss ein unterschiedlicher optischer Gangunterschied im Interferometer erzeugt werden. Deshalb ist mindestens in einem Arm des Interferometers der optische Gangunterschied vorbestimmt wellenlängenabhängig gemacht. Vorzugsweise ist dabei im Referenzarm des Interferometers der optische Gangunterschied wellenlängenabhängig und vorzugsweise rechnergesteuert einstellbar gemacht. So erfolgt eine Anpassung der Frequenz und gegebenenfalls auch der Form der Einhüllenden der Wavelets über der Wellenlänge, also auf der Spektrometerzeile und erleichtert damit technisch die extrem schnelle Erkennung und Auswertung der Wavelets. Ziel ist hierbei eine möglichst geringe Variation der Frequenz der Wavelets. Diese vorbestimmte Einstellung der Abhängigkeit des optischen Gangunterschiedes von der Wellenlänge kann somit das axiale Nachstellen des Retroreflektors beim Wechsel des auszulesenden Schichtenpaketes vollständig überflüssig machen.

Die Einstellung der Abhängigkeit des optischen Gangunterschieds von der Wellenlänge kann im Interferometer mittels Dispersion, aber auch mittels Diffraktion oder mittels einer Kombination von beiden erzeugt werden. Die kann gleichzeitig in beiden Interferometerarmen oder auch nur in jeweils einem verursacht werden, wobei auch das optische Abbildungssystem bereits etwas Abhängigkeit des optischen Gangunterschieds von der Wellenlänge einbringen kann, jedoch in der Regel in eher geringer Größe.

Weiterhin ist es auch vorzugsweise möglich, dass die Abhängigkeit des optischen Gangunterschieds von der Wellenlänge im umgekehrten Sinne wie vorab beschrieben einzusetzen und zwar so, dass sich für die Wavelets auf der Wellenlängenachse eine - vorzugsweise mittels FFT - charakteristische und gut auswertbare Verschiebung der Mittenfrequenz der Wavelets ergibt, also der Änderung der Mittenfrequenz der Wavelets von einem Wavelet zum nächsten. Diese veränderte Mittenfrequenz wird erfindungsgemäß dazu benutzt, vorzugsweise die Identität eines Wavelets zweifelsfrei zu erkennen. Diese Applikation wird jedoch eher für spezielle Anwendungen als vorteilhaft angesehen. Dabei wird vorzugsweise eine - durch die Abhängigkeit des optischen Gangunterschieds von der Wellenlänge gezielt mitinduzierte - stetig fallende oder stetig steigende Mittenfrequenz der Wavelets erzeugt. Diese Abhängigkeit des optischen Gangunterschieds von der Wellenlänge beruht auf der Grundlage der Dispersion und/oder Diffraktion in mindestens einem der beiden Arme des Zweistrahl-Interferometers. Da die Frequenzvariation bei effizienter Nutzung der Sensorelemente wegen des Abtast-Theorems in der Regel nur in einem eher begrenzten Rahmen möglich ist, es sei denn bei Anwendung von Sub-Nyquist-Verfahren, wird dieser Ansatz eher für eine begrenzte Anzahl von Schichten und damit auszuwertenden Wavelets eingesetzt werden können. Mit der schnellen Bestimmung der mittleren Frequenz der Wavelets, beispielsweise mittels FFT-Prozessoren, können auch Trends im Gesamtsystem, beispielsweise Abstandsänderungen der Fokussieroptik zum Volumenspeicher oder Variationen des Schichtabstandes, sehr gut erkannt und damit auch korrigiert werden.

Es ist aber auch möglich, das erfinderische, interferometrische, konfokale Verfahren für optische Datenspeicher, insbesondere Terabyte-Volumenspeicher, vorzugsweise bei einem rotierenden dünnen Low-cost-Plattenspeichers mit vorzugsweise nur einer einzigen datentragenden Schicht anzuwenden und nur die Robustheit gegenüber Änderungen der Tiefenposition der datentragenden Schicht zu nutzen. Der Einsatz wird hier, insbesondere auch bei elektronischen Spielwaren und zur optoelektronischen Kennzeichnung von Produkten gesehen. Auf einen Axial-Scan des Fokussiersystems kann hier durch die Anwendung der Erfindung vollständig verzichtet, da für jede Tiefenposition ein abtastender Fokusfleck zur Verfügung steht. Die Änderungen der Tiefenposition können hierbei beispielsweise durch eine wellige Topografie der Oberfläche dieses Low-cost-Plattenspeichers, oder durch ein Taumeln des Plattenspeichers infolge einer schlechten Wälzkörperlagerung oder auch durch eine etwas wellige Datenschicht hervorgerufen sein. Die Variation der Tiefenposition der datentragenden Schicht kann dann auf der Spektrometerachse zu einem "springenden Wavelet", welches jedoch mittels schneller Prozessoren in einem vergleichsweise großen Bereich sicher erfasst werden kann. Das Speichermedium kann eine dünne, beispielsweise aufgeklebte Kunststofffolie sein, die beispielsweise in einer Tiefe von etwa 20 μm ausgelesen wird. Bei Anordnung von strichförmigen Datenpits auf der datentragenden Schicht kann der Lateral-Scan zum Auslesen des Speichers gegebenenfalls auch von Hand erfolgen, wobei der Scanner vorzugsweise mechanisch auf die Kunststofffolie aufgesetzt wird. Im Regelfall kann das Auslesen von strichförmigen Datenpits jedoch durch einen opto-mechanischen 1D-Lateral-Scanner, vergleichbar einem Strichcode-Scanner, erfolgen. Als Lichtquelle kann bei dieser Applikation eine SLD eingesetzt werden, die beispielsweise bei etwa 700 nm eine spektrale Halbwertsbreite von 50 nm bis 100 nm aufweisen kann.

Ein weiterer Aspekt der vorliegenden Erfindung betrifft eine interferometrische, konfokale Anordnung für optische Datenspeicher, insbesondere zum Lesen optischer Datenspeicher, insbesondere Terabyte-Volumenspeicher, im Auflicht oder auch im Durchlicht mit einem Interferometer und mit einer Multiwellenlängen-Quelle elektromagnetischer Strahlung oder einer Vielzahl von Multiwellenlängen-Quellen und mit mikroskopischer Abbildung des Inneren des Volumenspeichers mittels Fokussier-Systems, welches im interferometrischen Strahlengang angeordnet ist, auf einen gerasterten Empfänger elektromagnetischer Strahlung wird erfindungsgemäß das Interferometer mit einer chromatisch-konfokalen Anordnung im Abbildungsstrahlengang des Fokussier-Systems gekoppelt, wobei dem gerasterten Empfänger ein Spektrometer vorgeordnet ist. Dabei sind im Referenzstrahlengang keine chromatisch-konfokalen Komponenten angeordnet. In anderen Worten ist der Referenzstrahlengang bevorzugt frei von chromatisch-konfokalen Komponenten. Dabei ist das Interferometer vorzugsweise als Zweistrahl-Interferometer ausgebildet.

Geht man von einer Separierung der Datenschichten in der Tiefe des Speichermediums, um das Übersprechen zu minimieren, beispielsweise vom Wert der zehnfachen Halbwertsbreite FWHM des konfokalen Signals aus, welches bekannterweise aus der jeweiligen Wellenlänge λ und dem Aperturwinkel α der numerischen Apertur sin α des Fokussier-Systems mit der Gleichung (2) für den Brechungsindex n folgt

$$FWHM = \frac{0{,}45\lambda}{n(1-\cos(\alpha))} \ , \tag{2}$$

ergibt sich bei Fokussier-Systemen mit einer hohen numerischen Apertur NA > 0,65, und bei elektromagnetischer Strahlung im VIS-Bereich eine Separierung der Datenschichten in der Tiefe in der Größenordnung von 10 μm. Dies kann bereits genügen, um das bekannte Übersprechen weitgehend auszuschließen. Das absolute Minimum für den Schichtenabstand kann etwa bei 3 bis 5 Halbwertsbreiten des konfokalen Signals, s. a. Gleichung (2) liegen, was im blauen oder violetten Spektralbereich, einschließlich des UV-Bereiches, Schichtabstände von wenigen Mikrometern ermöglichen kann. Jedoch muss dies auch stets im Zusammenhang mit der eingesetzten Algorithmik zur Auswertung der optischen Daten und den dabei einzuhaltenden sehr kleinen Fertigungstoleranzen des Speichermediums betrachtet werden.

Bei einer Separierung der Datenschichten in der Tiefe von näherungsweise 10 μm sind beispielsweise 16 Schichten in einem Tiefenbereich des Speichermediums von näherungsweise 0,2 mm bei einem Fokussier-System mit einer numerischen Apertur von näherungsweise 0,7 bei Nutzung des VIS-Bereiches unterzubringen. Der Abstand der Schichten kann dabei durchaus über der Tiefe etwas variabel ausgebildet sein.

Dabei müssen folgende Bedingungen für die Generierung zuverlässig auswertbarer Signale eingehalten sein:

1. Der Abstand des Fokussier-Systems zur optischen Grenzfläche des Speichermediums sowie der Brechungsindex und die Dispersion des Speichermediums sind eng toleriert.
2. Das optische Design des Fokussier-Systems ist im Hinblick auf das eng tolerierte Speichermedium vorzugsweise so durchgeführt, dass bei der Ausbildung von Fokusflecken jeder Wellenlänge der für die Auslesung genutzten elektromagnetischen Strahlung im Speichervolumen die sphärische Aberration hinreichend klein gemacht ist, damit in jeder Tiefe des Speichermediums reflektierte oder gestreute fokussierte elektromagnetische Strahlung eine hinreichend gering aberrierte Wellenfront liefern kann, die dadurch mit einer im Interferometer kohärent erzeugten Referenzwelle zur signaltechnisch hinreichend gut auswertbaren Interferenz gelangen kann.

Bei hinreichend kleiner sphärischer Aberration im Fokussier-System für alle genutzten Wellenlängen kann ein hinreichend gut moduliertes Interferenzsignal auch für alle - jeweils zumindest näherungsweise entlang einer Geraden in der Tiefe des Speichermediums durch chromatische Tiefenaufspaltung separierten - Fokusflecken, die reflektiert oder gestreut werden, gebildet werden. Die zumindest näherungsweise Eliminierung der sphärischen Aberration für alle genutzten Wellenlängen ermöglicht die Überwindung des bekannten Problems des recht stark begrenzten Auslesetiefenbereiches von beispielsweise nur +/-100 μm bei hochaperturigen Fokussier-Systemen, z. B. bei einer numerischen Apertur von 0,55 und einer Wellenlänge des Lichts von 780 nm aufgrund der sphärischen Aberration ohne die Nutzung aktiver Optik. Das unkompensierte System ermöglicht das Auslesen von nur etwa 10 Schichten.

Bei dem erfinderischen Ansatz ist vorzugsweise also für jede Wellenlänge die sphärischen Aberration schon durch das Design des chromatisch längsaufspaltenden Fokussier-Systems hinreichend klein gemacht, so dass ein hinreichend großer Auslesetiefenbereich erreichbar ist. Dieser kann beispielsweise +/- 300 μm bei einer numerischen Apertur von 0,7 betragen, wodurch im VIS-Bereich durchaus 32 Schichten gleichzeitig und mit hoher Zuverlässigkeit ausgelesen werden können.

Beim Einsatz einer Weißlicht-Kontinuums-Quelle, beispielsweise ein Weißlicht-Kontinuums-Laser, und einer Sensorzeile mit einer hohen Anzahl von Sensorelementen, deren Sensorelemente parallel und damit sehr schnell ausgelesenen werden, kann die Forderung nach der genauen Abstandspositionierung des Abtastkopfes etwas entschärft werden, da in jedem Fall ein Pit oder Dot einer bestimmten Datenschicht von einem Fokusfleck getroffen wird, auch wenn die Wellenlänge des jeweils zumindest näherungsweise beugungsbegrenzten Fokusflecks für diese Datenschicht oder Tiefe dadurch etwas variieren kann. Die Wellenlänge des Fokusflecks ist also innerhalb bestimmter Grenzen gleitend. Das verbessert jedoch die Robustheit der Datengewinnung gegenüber Fertigungstoleranzen des Speichermediums und gegenüber Vibrationen erheblich.

Die Auswertung des Interferenzsignals erfolgt vorzugsweise mittels eines Gitter-Spektrometers mit vorzugsweise mindestens einer sehr schnellen Fotodiodenzeile, die im Mikrosekundenbercih oder auch im Sub-Mikrosekundenbereich auswertbare Signale liefern kann und eine hohe Sensitivität aufweist. Bei einer hinreichend starken Lichtquelle kann vorzugsweise auch eine schnelle CMOS-Zeilenkamera eingesetzt werden. Dabei stellt der Zeilensensor, also die spektrale Achse, die λ-Achse dar, wobei λ die Wellenlänge der elektromagnetischen Strahlung darstellt. Der Chip der Fotodiodenzeile oder auch der CMOS-Zeilenkamera kann auch eine Intelligence-on-Chip-Funktionalität aufweisen. Mir einem Parallelzugriff auf die einzelnen Sensorelemente kann so mittels festverdrahteten Prozessoren eine extrem schnelle Auswertung der Spektren, also hier der Wavelets, durchgeführt werden.

Für jede Tiefe einer Datenträgerschicht im Speichermedium oder für jeden beliebig tief liegenden Dot innerhalb des auswertbaren Bereiches des Speichermediums gibt es also Licht einer genau passenden Wellenlänge, das genau dort einen Fokus bildet, so dass sich stets ein zumindest näherungsweise beugungsbegrenzter Fokusfleck ausbilden kann, wobei die Wellenlänge des Lichtes etwas variieren kann. Genau in diesem Wellenlängenbereich entsteht auf diesem Zeilensensor jeweils ein Wavelet, wobei die genau passende Wellenlänge zumindest näherungsweise die Schwerpunktwellenlänge des Wavelets bildet. Im Minimum genügen drei Sensorelemente mit geeignetem lateralen Abstand, um die Existenz eines Wavelet mit zumindest näherungsweise bekannter Frequenz zu erkennen. Besser ist es jedoch, vier bis acht Sensorelemente geeigneten lateralen Abstandes zu verwenden, um die Existenz eines Wavelets mit zumindest näherungsweise bekannter Frequenz sicher zu erkennen. Dabei ist es von Vorteil, wenn die Phasendifferenz zwischen zwei - von direkt benachbarten Sensorelementen - abgetasteten Bereichen des Wavelets zumindest näherungsweise 90 Altgrad beträgt.

Bei nicht so eng toleriertem Abstand des Tastkopfes, wobei damit als Folge auch eine gleitende Mittenwellenlängen der Wavelets auftritt, gibt es vorzugsweise mindestens eine, in der Regel mehrere unstrukturierte und reflektierende Referenzschicht im Speichermedium, beispielsweise auf dem Grund desselben, um die Zuordnung der Wavelets zu den einzelnen Schichten sicher zu ermöglichen.

Andererseits kann auch ein Datenspeicher mit einer großen Anzahl von Speicherplatten aufgebaut werden, wobei jeder Seite einer Platte vorzugsweise jeweils ein vollständiges Fokussiersystems zugeordnet ist. Dies ist durch die Anwendung der Erfindung besonders einfach, da dadurch auf den Axial-Scan im Fokussiersystem verzichtet werden kann.

Bei einer interferometrischen, konfokalen Anordnung für optische Datenspeicher, insbesondere Terabyte-Volumenspeicher, kann die diffraktiv-optische Zonenlinse in der Pupille in der abgewandten Brennebene des Fokussierobjektivs angeordnet sein. Damit ist die numerische Apertur des Lichtes aller Wellenlängen gleich. Die Pupille kann aber auch für längerwelliges Licht durch ein chromatisches Filter mit radialer Abhängigkeit, auch als chromatische Apodisation bekannt, etwas größer gemacht sein, da so die beugungsbegrenzte laterale Ausdehnung für Foki längerwelligen Lichts der des kürzerwelligen Lichts angeglichen werden kann.

Als Weißlichtquelle wird beispielsweise ein Weißlicht-Kontinuums-Laser oder es werden eine oder mehrere fasergekoppelte Superlumineszenz-Dioden eingesetzt.

Weiterhin ist vorzugsweise mindestens eine zusätzliche Referenzschicht im Speichermedium angeordnet. Diese dient zur eindeutigen räumlichen Strukturierung des Speichervolumens in der Tiefe bei der Abtastung mit etwas gleitender Wellenlänge infolge eines nicht sehr eng tolerierten Abstandes des optischen Abtastkopfes zur Oberfläche des Speichermediums oder durch Fertigungsungenauigkeiten des Speichermediums.

Weiterhin ist bei der erfindungsgemäßen, interferometrischen, konfokalen Anordnung für optische Datenspeicher, insbesondere Terabyte-Volumenspeicher, dem Interferometer vorzugsweise ein fasergekoppeltes Zeilen-Spektrometer nachgeordnet.

Weiterhin ist bei der erfindungsgemäßen, interferometrischen, konfokalen Anordnung für optische Datenspeicher, insbesondere Terabyte-Volumenspeicher, vorzugsweise mindestens ein optisches Element im kollimierten Referenzstrahlengang mit dispersivem Material angeordnet. Dies ermöglicht eine Gangunterschiedsanpassung zur Anpassung der Frequenz der Wavelets über der Wellenlänge und kann das axiale Nachstellen des Retroreflektors beim Wechsel des Schichtenpaketes überflüssig machen.

Weiterhin ist bei der erfindungsgemäßen, interferometrischen, konfokalen Anordnung für optische Datenspeicher, insbesondere Terabyte-Volumenspeicher, das optische Element mit dispersivem Material im kollimierten Referenzstrahlengang vorzugsweise als eine Planparallelplatte ausgebildet.

Weiterhin kann vorzugsweise bei der erfindungsgemäßen, interferometrischen, konfokalen Anordnung für optische Datenspeicher, insbesondere Terabyte-Volumenspeicher, im kollimierten Referenzstrahlengang ein Diffraktionsmodul mit Gittern angeordnet sein.

Weiterhin kann vorzugsweise bei der erfindungsgemäßen, interferometrischen, konfokalen Anordnung für optische Datenspeicher, insbesondere Terabyte-Volumenspeicher, das Diffraktionsmodul mittels zwei oder auch vier baugleicher und sämtlich parallel zueinander angeordneter Phasengitter aufgebaut sein. Diese Phasengitter können als Phase-mostly SLMs ausgebildet sein. Diese SLMs sind vorzugsweise in ihren Gitterparametern elektronisch steuerbar ausgebildet.

Vorteilhaft kann der erfindungsgemäßen, interferometrischen, konfokalen Anordnung für optische Datenspeicher, insbesondere Terabyte-Volumenspeicher, die Einhaltung folgender erster Bedingung sein:

Der mittlere optische Gangunterschied im Referenzarm eines Interferometers soll vorzugsweise so eingestellt sein, dass sich - beim Auftreffen eines Bündels mit der Wellenlänge $\lambda + \Delta\lambda$ auf ein Reflexionselement der Datenschicht - eine Änderung der Phase von zumindest näherungsweise $\pi/2$ ergibt im Vergleich zu einem Bündel mit der Wellenlänge $\lambda$, welches auf dasselbe Reflexionselement trifft, wobei das Licht mit der Wellenlänge $\lambda + \Delta\lambda$ vom benachbarten Sensorelement des Spektrometers detektiert wird. So kann eine Periode des Wavelets unter der Einhüllenden bereits mit vier Sensorelementen recht gut abgetastet werden und die Signalamplitude bestimmt werden. Diese Einstellung des optischen Gangunterschiedes kann beispielsweise mittels axial verschiebbaren Retroreflektors im Referenzarm des Interferometers erfolgen.

Weiterhin soll hierbei vorzugsweise die folgende zweite Bedingung für ein Fokussier-System mit hoher numerischer Apertur gelten:

Der Fokus, der von einer Wellenlänge $\lambda + \Delta\lambda$ im Speichermedium gebildet wird, wobei $\Delta\lambda$ das vom Spektrometer aufgelöste Spektralelement darstellt, sollte vorzugsweise im Speichermedium zu einer Verschiebung der Fokusposition in der Tiefe von $n\lambda/30$ im Minimum und maximal von $n\lambda/3$ führen, wobei $n$ den Brechungsindex des Speichermediums darstellt. Damit ist gewährleistet, dass genügend Sensorelemente ein moduliertes Signal unter der Einhüllenden eines jeden Wavelets detektieren können, wobei diese Abschätzung stets auch im Zusammenhang mit der Halbwertsbreite des konfokalen Signals und dem Schichtabstand sowie der Anzahl der verfügbaren Sensorelemente des Spektrometers gesehen werden muss. Weiterhin sollte $\Delta\lambda$ aus energetischen Gründen möglichst nicht weit unter 0,05 nm gewählt werden.

Für Lichtbündel mit der Wellenlänge von $\lambda$ = 600,0 nm und einem Gangunterschied $\Delta x$ von 450 $\mu$m im Interferometer ergibt sich mit Gleichung (3)

$$\phi = 2\pi \cdot \frac{\Delta x}{\lambda} \qquad\qquad (3)$$

eine Phasendifferenz $\phi$ von 1500 $\pi$. Das Sensorelement $i$ des Spektrometers bei der Wellenlänge 600,0 nm detektiert also ein Interferenzsignal mit dem variablen Phasenterm $\phi_i$ von 1500 $\pi$. Das Spektrometer soll 0,2 nm auflösen, d. h. zwei benachbarte Sensorelemente $i$ und $i+1$ detektieren Licht von Wellenlängen, das sich um 0,2 nm in der Wellenlänge unterscheidet. Für ein Lichtbündel mit der Wellenlänge von $\lambda$ = 599,8 nm folgt nun ein Interferenzsignal mit einer Phasendifferenz von 1500,5 $\pi$, so dass das benachbarte Sensorelement $i+1$, welches das Interferenzsignal mit der Wellenlänge von $\lambda$ = 599,8 nm detektiert, nun einen Signalwert registriert, der um $\pi/2$ oder 90 Altgrad gegenüber dem des Sensorelementes $i$ verschoben ist. Über der Wellenlängenachse des Spektrometers entsteht so ein Wavelet, wobei in diesem Beispiel zwei benachbarte Sensorelemente $i$ und $i+1$ Signale mit einer Phasendifferenz von $\pi/2$ oder 90 Altgrad erfassen.

Geht man davon aus, dass beispielsweise etwa 100 bis 200 Sensorelemente zur lückenlosen Erfassung des Abstandes zwischen zwei Schichten - entsprechend zwei Wavelets auf der Spektrometerzeile oder Wellenlängenachse, benötigt werden, beispielsweise hier 120 Sensorelemente angenommen, können mit etwa 1000 Sensorelementen 8 Schichten gleichzeitig und mit hoher Zuverlässigkeit ausgelesen werden. Dabei kann der Spektralbereich von 500 nm bis ca. 700 nm genutzt werden. Eine Erhöhung der Anzahl der ausgelesenen Schichten im sichtbaren Spektralbereich setzt auch eine Erhöhung der spektralen Auflösung voraus. Dies macht den Einsatz hinreichend starker, vorzugsweise fasergekoppelter Weißlichtquellen und hochempfindlicher Sensorelemente erforderlich.

Der Schichtenabstand sollte bei einer numerischen Apertur des Fokussier-Systems von mindestens 0,5 beispielsweise so gewählt werden, dass bei einem zumindest näherungsweise beugungsbegrenzten Fokusfleck auf einer Schicht, das zugehörige Bündel auf der direkt benachbarten Schicht mindestens einen Durchmesser aufweist, der dem Fünf- bis Zehnfachen des beugungsbegrenzten Fokusflecks entspricht.

Die Brennweite des Fokussier-Systems ist in weiten Grenzen frei wählbar. Je größer die Brennweite gemacht ist, umso geringer ist die - für einen bestimmten Tiefenbereich - durch die Diffraktion aufzubringende Brechkraft. Grundsätzlich einfacher ist es deshalb, das Fokussier-System mit nicht zu kurzer Brennweite zu gestalten. Das führt jedoch andererseits zu einem großen Durchmesser des Fokussier-Systems und damit großem Bauvolumen.

Ein Speichervolumen von einem TeraByte setzt eine doppelseitige Nutzung der erfindungsgemäßen Speicherplatte und eine entsprechende laterale Ausdehnung dieser Speicherplatte voraus, die dabei etwa den Durchmesser einer Standard-DVD aufweisen kann. Andererseits kann das Speichervolumen einer üblichen DVD auf einer im Durchmesser zu dieser deutlich kleineren erfindungsgemäßen Volumen-Speicherplatte untergebracht werden.

Ein weiterer Aspekt der Erfindung betrifft eine chromatisch-konfokale Anordnung zum Schreiben für optische Datenspeicher, insbesondere Terabyte-Volumenspeicher, im Auflicht oder auch im Durchlicht mit zumindest einer Multiwellenlängen-Quelle elektromagnetischer Strahlung gekennzeichnet dadurch, dass zumindest eine chromatisch-konfokale Komponente im Abbildungsstrahlengang des Fokussier-Systems angeordnet ist.

Ein weiterer Aspekt der vorliegenden Erfindung betrifft ein Verfahren zur Herstellung von Datenspeichern, insbesondere von Terabyte Datenspeichern bzw. die Verwendung eines Datenspeichers zum Speichern von Daten, insbesondere im Terabytebereich.

Insbesondere betrifft dieser Aspekt der vorliegenden Erfindung die Verwendung eines Datenspeichers zum Speichern von Daten, insbesondere im Terabytebereich, mittels der erfindungsgemäßen interferometrischen konfokalen Anordnung.

Bevorzugt wird der Datenspeicher mit einem chromatisch-konfokalen Schreibkopf und/oder mit einem fasergekoppelten Multiwellenlängen-Laser- und/oder einer fasergekoppelten und/oder schaltbaren Multi-Superlumineszenz-Dioden-Lichtquelle in mehreren Schichten gleichzeitig und/oder in einem großen Tiefenbereich im unstrukturierten Speichervolumen beschrieben.

Erfindungsgemäß können Volumenspeicher vorzugsweise mit einem chromatisch-konfokalen Schreibkopf mit einem vorzugsweise fasergekoppelten Multiwellenlängen-Laser- oder einer vorzugsweise fasergekoppelten und gegebenenfalls auch schaltbaren Multi-Superlumineszenz-Dioden-Lichtquelle in mehreren Schichten gleichzeitig, bzw. auch in einem großen Tiefenbereich im unstrukturierten, "optisch-brennbaren" Speichervolumen beschrieben werden. Dieses "optische Brennen" erfolgt vorzugsweise mittels schneller optischer Schalter, die im Schreibvorgang das Spektrum der Schreibstrahlung sehr schnell anpassen. Optische Schalter können beispielsweise Filter mit variierbarem Absorptionskoeffizient sein. Beispielsweise kann ein Filter elektromagnetische Strahlung einer bestimmten Wellenlänge absorbieren und der Absorptionskoeffizient für diese Wellenlänge gesteuert werden. Alternativ kann der Filter auch elektromagnetische Strahlung in einem Wellenlängenbereich absorbieren und über den gesamten Wellenlängenbereich einen Absorptionskoeffizienten aufweisen, welcher insbesondere schnell variiert werden kann. Es ist auch möglich, daß der Filter für den ganzen Wellenlängenbereich verschiedene Absorptionskoeffizienten aufweist, d.h. der Filter verschiedene Wellenlängen unterschiedlich absorbiert. Die einzelnen Absorptionskoeffizienten können unabhängig voneinander oder miteinander variiert werden. Dies kann beispielsweise durch Anlegen einer Spannung und/oder durch einen Stromfluß geschehen. In anderen Worten kann die Absorption des Filters durch Anlegen einer Spannung und/oder durch einen Stromfluß gesteuert bzw. geregelt werden. Optische Schalter können auch Strahler monochromer elektromagnetischer Strahlung oder Mulitwellenleängenstrahler sein. Beispielsweise kann die Wellenlänge der ausgestrahlten elektromagnetischen Strahlung variiert werden kann. Es kann auch die Intensität der ausgestrahlten elektromagnetischen Strahlung geändert werden. Insbesondere kann sowohl die Wellenlänge als auch die Intensität der ausgestrahlten elektromagnetischen Strahlung variiert werden.

Im unstrukturierten Speichervolumen können beispielsweise so "optisch-gebrannte" Dots erzeugt werden, die beim Lesen gut detektierbare Mikrostreuer in einem transparenten, beispielsweise auch anorganischen Speichermedium darstellen, das in hohem Maße langzeitstabil ist.

Die gesamte Tiefe des Speichervolumens kann also mittels chromatisch-konfokaler Technik in einem oder mehreren Vorgängen beschrieben werden.

Es sind auch andere Techniken zur Herstellung von optischen Vielfachschichten- bzw. Multilayer-Datenspeichern einsetzbar, die beispielsweise auf einer sukzessiven schichtenweisen Herstellung des Volumenspeichers basieren. Die dafür einsetzbaren Techniken zur Herstellung stehen jedoch hier nicht im Vordergrund.

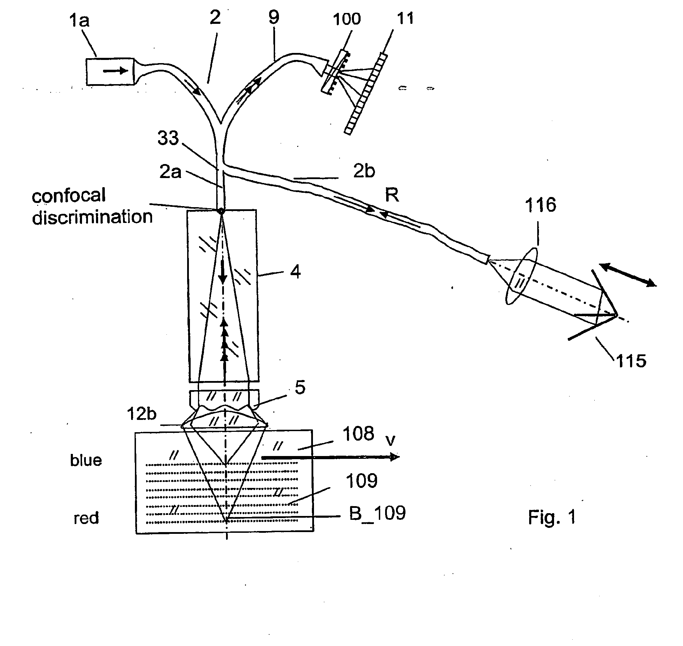

**Beschreibung der Figuren 1 bis 4**

Die Erfindung wird beispielhaft anhand der Figuren 1 bis 4 beschrieben.

Auf die Darstellung von Dots und/oder Pits sowie Reflexionsschichten durch Brechzahlunterschiede, die allein zur räumlichen Strukturierung des Speichervolumens für ein oder mehrere Referenzsysteme dienen, wird hier verzichtet.

Zu Figur 1: Das von einem vergleichsweise starken Kontinuums-Weißlichtlaser 1a ausgehende Licht gelangt über eine Lichtleitfaser 2 und einen x-Koppler 33, als Teillicht über ein Faserstück 2a und über eine Grinlinse 4 zur Kollimierung des Lichtbündels auf eine diffraktiv-optische Zonenlinse 5 mit in Abhängigkeit von der Lichtwellenlänge variabler negativer Brechkraft in der ersten Beugungsordnung, so dass diese als Zerstreuungslinse wirkt. Das chromatisch aufgespaltete Licht gelangt auf ein gut chromatisch korrigiertes Mikroobjektiv 12b.

Durch die wellenlängenabhängige Brechkraft der diffraktiven lichtzerstreuenden Zonenlinse 5 führt dies für das Lichtbündel nach dem Mikroobjektiv 12b zu einer chromatischen Längsaufspaltung, wobei hier die Foki des langwelligen Lichts am Weitesten vom Mikroobjektiv 12b entfernt sind.

Dem Mikroobjektiv 12b ist in Lichtrichtung das optische Speichermedium 108 mit einer Vielzahl von Datenschichten übereinander nachgeordnet, beispielsweise auch mit der Datenschicht 109. Das optische Speichermedium soll hierbei mit der Umfangsgeschwindigkeit v rotieren. Auch für diese Datenschicht 109 gibt es genau ein Lichtbündel B_109, welches eine genau bestimmte Wellenlänge aufweist und einen scharfen Fokus auf der Datenschicht 109 ausbildet. Dieser Fokusfleck wird entweder an der Datenschicht 109 wenigstens teilweise reflektiert oder durch ein Daten-Pit mit einer Vertiefung von einer Viertelwellenlänge in bekannter Art ausgelöscht. Im Fall der Reflexion gelangt das Lichtbündel B_109 über das Mikroobjektiv 12b und über die diflraktiv-optische Zonenlinse 5, wobei das Lichtbündel B_ 109 die Zonenlinse 5 genau in derselben ersten Beugungsordnung passiert wie im Hinlauf, über die Grinlinse 4 auf das Ende der Faser 2a, welches die konfokale Diskriminierung realisiert, wodurch Licht des Lichtbündel B_109, welches beispielsweise an einer über oder unterhalb der Datenschicht 109 liegenden Schicht reflektiert wird, nahezu vollständig gesperrt wird und somit das Übersprechen stark reduziert wird. Das konfokal diskriminierte Licht kann also wieder in die Faser 2a eintreten. So wird jede Datenschicht im Speichermedium 108 von einem Lichtbündel passender Wellenlänge optisch zumindest näherungsweise beugungsbegrenzt abgetastet und konfokal diskriminiert. Damit tritt das Licht in "Spektralpaketen" in die Faser 2a ein, da Licht aus dem Bereich des Speichermediums 108, wo sich gerade keine Datenschicht befindet, jedoch sich auch ein beugungsbegrenzter Fokusfleck befindet, keinen Fokus auf dem Ende der Faser 2a ausbilden kann und das Licht dieser Wellenlänge nahezu vollständig durch die konfokale Diskriminierung unterdrückt wird. Das in die Faser 2a eintretende Licht passiert den x-Koppler 33 in Richtung der Auskoppelfaser 9. Das Referenzbündel R, welches im Referenzstrahlengang in der Faser 2b nach Austritt aus derselben und Kollimation am Kollimator 116 und nach Reflexion am Tripelspiegelreflektor 115 entsteht, passiert den x-Koppler 33 ebenfalls in Richtung der Auskoppelfaser 9. Referenzlicht und Licht aus dem Speichermedium 108 gelangen nach dem Durchsetzen der Auskoppelfaser 9 auf ein hochempfindliches fasergekoppeltes Spektrometer 100 - wobei hier die zugehörige Abbildungsoptik des Spektrometers nicht dargestellt wurde -und auf eine hochempfindliche CMOS-Zeilenkamera 11 und kommen dort zur Interferenz. Dort wird das Spektrum des interferierenden Lichts ausgewertet. Die Auswertung erfolgt, indem die Größe der Signalamplitude des Wavelets in möglichst einfacher Art bestimmt wird, da die Frequenz des Wavelets zumindest näherungsweise bekannt ist. Dies kann im einfachsten Fall durch das Auswerten von einigen Sensorelementen erfolgen, die das Wavelet so abtasten, dass jeweils Signalwerte detektiert werden, die eine Viertel Periode verschoben sind. Die logische 1 oder die logische 0 werden mittels gleitender Triggerschwelle aus der Größe der Signalamplitude des Wavelets bestimmt. Die gleitende Triggerschwelle berücksichtigt die komplexe Situation der Signalentstehung, beispielsweise auch die Tiefe der Schicht und damit auch die auftretenden Lichtverluste.

Dabei ist der optische Gangunterschied im fasergekoppelten Interferometer mittels Tripelspiegelreflektors 115 so abgestimmt, dass dieser nur maximal einige 100 $\mu$m beträgt, jedoch nicht null ist. Die Auswertung kann andererseits auch mittels einer schnellen FourierTransformation (FFT) des Wavelets erfolgen.

Beim Wechsel des auszulesenden Schichtpaketes kann die CMOS-Zeilenkamera 11 auch lateral verschoben werden, damit diese nicht zu lang ausgebildet sein muss.

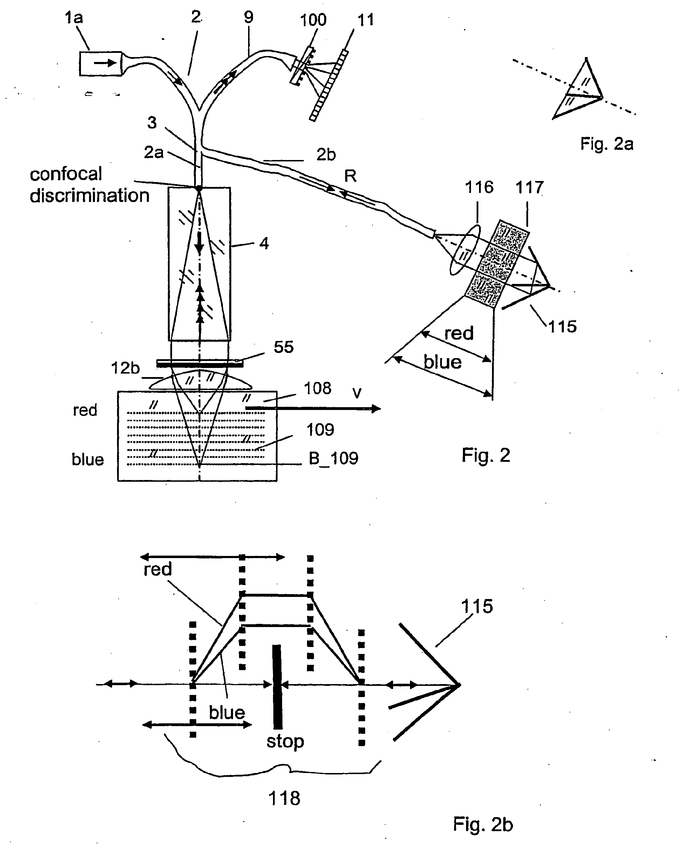

Zu Figur 2: Hierbei ist die diffraktiv-optische Zonenlinse 55 mit in Abhängigkeit von der Lichtwellenlänge variabler positiver Brechkraft in der ersten Beugungsordnung ausgebildet, so dass diese als Sammellinse wirkt. So bildet das langwelligere Licht die Foki in der minimalen Entfernung vom chromatisch gut korrigierten Mikroobjektiv 12b aus. Im Referenzarm des Interferometers ist eine Dispersionsplatte 117 im kollimierten Strahlengang angeordnet, deren optische Dicke sich wegen des größeren Brechungsindexes des Plattenmaterials mit kürzerer Wellenlänge vergrößert. Dies kann zur gezielten Beeinflussung des optischen Gangunterschiedes in Abhängigkeit von der Wellenlänge im Interferometer genutzt werden. Damit ist die Möglichkeit gegeben, die Frequenz der Wavelets über der Wellenlänge gezielt zu beeinflussen und somit die unerwünscht starke Vergrößerung der Frequenz der Wavelets in Richtung kürzerer Wellenlängen erheblich zu verringern. In der Figur 2a ist ein Tripelprismenreflektor dargestellt, der damit dispersiv ist, um eine Abhängigkeit des optischen Gangunterschieds von der Wellenlänge zu ermöglichen.

Die Figur 2b stellt die Möglichkeit dar, mittels Diffraktion an vier Liniengittern 118, die als Phasengitter in paralleler Lage zueinander und hier senkrecht zur optischen Achse, ausgebildet sind, eine Variation des optischen Gangunterschieds über der Wellenlänge zu erzeugen, wobei hier das langwelligere Licht den größeren optischen Gangunterschied aufweist. Damit kann die diffraktiv-optische Zonenlinse 5 mit negativer Brechkraft ausgebildet sein, wodurch die Foki des langwelligeren Lichtes den größeren Abstand vom System aufweisen und damit auch bei Interferenz den größeren optischen Gangunterschied. Dieser größere optische Gangunterschied kann mittels der Gitteranordnung, bestehend aus vier Liniengittern 118, wenigstens zum Teil kompensiert werden.

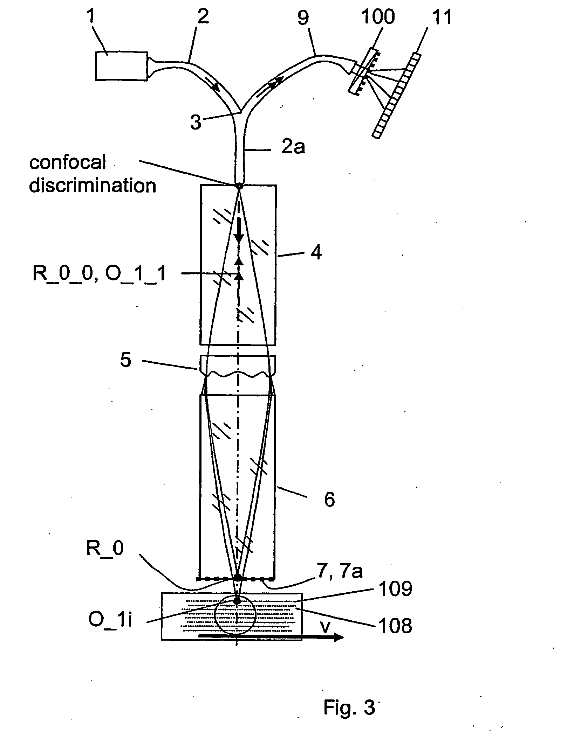

Zu Figur 3: Das von einer Weißlichtquelle 1 ausgehende Licht gelangt über eine Lichtleitfaser 2 und eine y-Weiche 3 und über ein Faserstück 2a über eine Grinlinse 4 zur Kollimierung des Lichtbündels auf eine diffraktiv-optische Zonenlinse 5 mit in Abhängigkeit von der Lichtwellenlänge variabler negativer Brechkraft, so dass diese als Zerstreuungslinse wirkt.

Das Lichtbündel wird an der diffraktiv-optischen Zonenlinse 5 in der nullten Beugungsordnung in einen Referenz-R und in der ersten Beugungsordnung in mehrere schwach divergierende Objektstrahlenbündel aufgespalten, so auch in ein Objektstrahlenbündel O_li. Dabei ist die nachfolgende Grinlinse 6 in ihrem geometrischoptischen Aufbau so abgestimmt, dass die Frontfläche 7 der Grinlinse 6, die als Referenzteilspiegel mit Strahlteilerschicht 7a wirkt, im Fokus des Bündels der nullten Beugungsordnung der diffraktiv-optischen Zonenlinse 5 liegt. Das an der Frontfläche 7 an der Strahlteilerschicht 7a reflektierte Teillichtbündel dient als Referenzbündel R. Das in der 1. Beugungsordnung die diffraktiv-optische Zonenlinse 5 passierende Teillichtbündel O_li durchsetzt die Frontfläche 7 der Grinlinse 6, welche die Referenzspiegelfläche darstellt, und gelangt in das Speichermedium 108. Durch die brechkraftvariable Wirkung der diffraktiv-optischen Zonenlinse 5 erfolgt in Abhängigkeit von der Lichtwellenlänge die Fokussierung des Objektstrahlenbündels in unterschiedlichen Tiefen des Speichermediums 108. Es besteht also eine chromatische Längsaberration oder Längsaufspaltung. Das aus dem Speichermedium 108 von der Datenschicht 109 rückreflektierte Licht passiert gemeinsam mit dem Referenzbündel R wieder die Grinlinse 6 und passiert die diffraktiv-optische Zonenlinse 5 wieder in der derselben Beugungsordnung wie im Hinweg und wird zum Objektstrahlenbündel O_1_li. Das an der Frontfläche 7, die als Referenzspiegelfläche wirkt, fokussierte Licht wird zum Teil reflektiert und passiert die diffraktiv-optische Zonenlinse 5 wieder in der nullten Beugungsordnung und wird zum Referenzstrahlenbündel R_0_0. So bestehen für die Schicht 109 zwei interferierende Bündel O_1_li und R_0_0, die auf das Ende der Monomodefaser 2 mittels Grinlinse 4 wieder fokussiert werden und in diese Monomodefaser 2 eintreten, wobei hier insbesondere für das Objektstrahlenbündel O_1_li eine konfokale Diskriminierung erfolgt. Nach dem Passieren der y-Weiche 3 gelangt das interferierende Licht über die Auskoppelfaser 9 auf ein Spektrometer 100 auf eine hochempfindliche CMOS-Zeilenkamera 11, die das entstehende Spektrum registriert. Dabei ist das Spektrum über der Wellenzahl moduliert - je nach den Bedingungen für konstruktive und destruktive Interferenz in Abhängigkeit von der Wellenlänge und dem optischen Gangunterschied am Objektpunkt - und bildet über der Wellenzahl ein Wavelet.

Das auf der Zeilenkamera 11 entstehende Signal kann bei festem optischen Gangunterschied $\Delta x$ in Abhängigkeit von der Wellenlänge $\lambda i$ mit folgender Gleichung (4) mit der Modulation m berechnet werden:

$$I(\lambda_i) = I_{Ref} + I_{Obj}(\lambda_i) + 2\sqrt{I_{Ref} \cdot I_{Obj}(\lambda_i)} \cdot m \cdot \cos\left(2\pi \cdot \frac{\Delta x}{\lambda_i} + \varphi_0\right). \qquad (4)$$

Der Wert $\Delta x$ kennzeichnet den Wegunterschied der interferierenden Wellenpakete, die aus der nullten Ordnung und der ersten Ordnung stammen, wobei der Wegunterschied $\Delta x$ wegen der Dispersion des Speichermediums etwas von der Wellenlänge abhängen kann.

Der Einfluss der konfokalen Blende auf das Signal wird über folgende Formel (5) bestimmt:

$$I = \frac{\sin\left(\frac{u}{2}\right)}{\frac{u}{2}} \quad \text{mit} \quad u = \frac{2\pi}{\lambda} NA^2 z(\lambda) \qquad (5)$$

Mit NA wird die numerische Apertur des Lichtkegels am Objektpunkt bezeichnet und z gibt die Tiefe an.

Mit dieser Anordnung kann mit hoher Sicherheit das Vorhandensein eines Datenpits erkannt werden, indem durch Auswertung des Spektrums ermittelt wird, ob ein Wavelet oder kein Wavelet entstanden ist, wobei kein Wavelet die Existenz eines Datenpits bedeutet.

Im Spektrometer 100 ist die spektrale Auflösung mindestens so hoch zu wählen, dass das von einem Element der Zeilenkamera 11 überdeckte Spektralintervall oder Wellenlängeninkrement $\Delta\lambda$ bei der Wellenlänge $\lambda$ klein genug ist, damit die Kohärenzlange 1, $1 = \lambda^2/\Delta\lambda$, größer als der optische Gangunterschied $\Delta x$ im Interferometer ist, damit Interferenz auftreten kann. Dieser optische Gangunterschied $\Delta x$ beträgt bis zu mehreren 100 $\mu$m und kann je nach der spektralen Auflösung und photometrischer Empfindlichkeit des verwendeten Spektrometers größer oder kleiner gewählt werden.

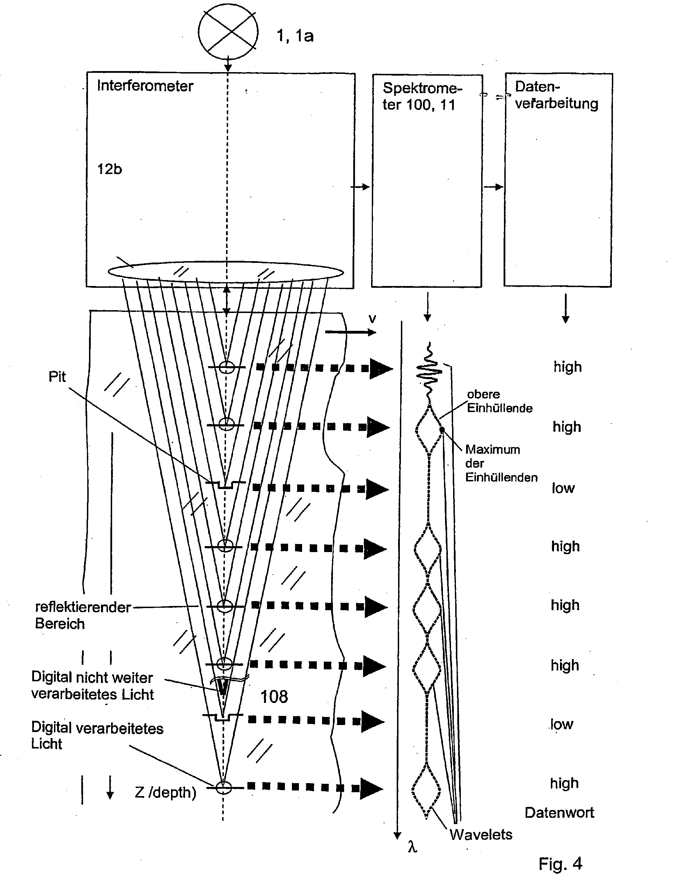

Die Figur 4 stellt das Prinzip der erfindungsgemäßen, interferometrischen, konfokalen Anordnung und des erfindungsgemäßen, interferometrischen, konfokalen Verfahrens mit integrierter chromatisch-konfokaler Tiefenaufspaltung dar. Es sind das Interferometer, das Objektiv 12b sowie das Speichermedium dargestellt. Auf der Spektrometerachse, also der $\lambda$-Achse, entstehen die Wavelets beim Vorhandensein von reflektierenden Bereichen im Speichervolumen 108 mit einer oberen Einhüllenden. Beim Vorhandensein eines Pits entsteht kein oder ein sehr schwaches Wavelet. Diese Einhüllende weist hier jeweils ein Maximum auf. Aus den Wavelets auf der Spektrometerachse werden mittels Datenverarbeitungseinheit die gewünschten digitalen Informationen gewonnen, hier jeweils die logischen Werte 0 und 1.

Dabei ist wichtig, dass stets Licht der Wellenlänge erkannt wird, also die Wellenlänge ermittelt wird, welches einen scharfen Fokus im Bereich der wellenoptischen Schärfentiefe ausbildet, der eine Datenschicht symmetrisch einschließt. Nur Licht dieser Wellenlänge kann eine logische Null mit hoher Zuverlässigkeit liefern.

Damit gibt es im Abtastsystem Licht bestimmter Wellenlängen, welches gerade digital weiterverarbeitet wird, also "digital weiter verarbeitetes Licht" und Licht bestimmter Wellenlängen, welches zu einem gegebenen Zeitpunkt gerade nicht weiterverarbeitet wird, also "digital nicht weiter verarbeitetes Licht".

Dabei kann sich durch Vibrationen der Übergang vom "digital weiter verarbeiteten Licht" zum "digital nicht weiter verarbeiteten Licht" sehr schnell ergeben. Mittels permanenter Ermittlung der Amplituden der Wavelets in der Umgebung von "digital weiter verarbeiteten Licht", also in der direkten Umgebung auf der Spektrometerachse, kann der Trend verfolgt werden. Am sichersten ist es jedoch, ständig die Amplituden aller Wavelets zu ermitteln, also stets alle Sensorelemente einer Spektrometerzeile auszuwerten.

Der Abstand zwischen den einzelnen Datenschichten sollte so gewählt sein, dass Licht, welches auf eine Datenschicht scharf fokussiert ist, von einer direkt benachbarten Datenschicht nicht wesentlich mehr reflektiertes Licht durch die konfokale Blende, beispielsweise hier ein Faserende, bringt, als von einem ein $\lambda$/4-Pit auf dem sich ein scharfer Fokus befindet, zurückkommen würde. Ein $\lambda$/4-Pit erzeugt ja die Auslöschung des eingestrahlten Lichts. Zu beachten ist stets, dass das Licht aus dem Speichervolumen nach der konfokalen Diskriminierung mittels Interferenz praktisch "verstärkt" wird. Durch die hohe spektrale Aufspaltung wird die Kohärenzlänge relativ groß, was somit auch kohärente Störungen ermöglichen kann. Die Anwendung der Interferenz macht aber auch die hohe Sensitivität des Verfahrens aus und gibt dadurch auch die Möglichkeit, mehr als 100 übereinander liegende Schichten in einem Volumen auszulesen.

**Patentansprüche**

1. Interferometrisches, konfokales Verfahren zum Lesen optischer Datenspeicher mit

   zumindest einer Multiwellenlängen-Quelle (1, 1 a) elektromagnetischer Strahlung,
   einem Interferometer und mit
   mikroskopischer Abbildung des Inneren des Volumenspeichers mittels Fokussier-Systems auf einen gerasterten Empfänger (11) elektromagnetischer Strahlung,
   wobei
   eine chromatisch-konfokale mikroskopische Technik mit einer spektralen Zweistrahl-Interferometrie derart verfahrensmäßig verbunden ist, daß
   dem gerasterten Empfänger (11) ein Spektrometer (100) vorgeordnet ist und
   im Interferometer bei einem optischen Gangunterschied ungleich null gearbeitet wird und
   bei einem reflektierenden Bereich im Speichermedium (108) mindestens ein Wavelet über der spektralen Achse des Spektrometers (100) erzeugt wird, wobei der reflektierende Bereich ein Dot in Gegensatz zu einem Pit darstellt,
   **dadurch gekennzeichnet, daß** eine Wellenlängenabhängigkeit über dem Gangunterschied derart eingestellt ist bzw. wird, daß diese mit der jeweiligen Wellenlänge eine sich insgesamt wenig ändernde Variation der Frequenz der Wavelets auf der Spektrometerachse ergibt.

2. Interferometrisches, konfokales Verfahren für optische Datenspeicher nach Anspruch 1,
   **gekennzeichnet dadurch,**
   **dass** durch chromatische Längsaberration, beziehungsweise chromatische Tiefenaufspaltung, in unterschiedlichen Tiefen des Speichermediums (108) Foki ausgebildet werden, wobei für jeden Fokus jeder beliebigen Wellenlänge im genutzten Spektralbereich, die sphärische Aberration zu einem Minimum gemacht ist.

3. Interferometrisches, konfokales Verfahren für optische Datenspeicher nach mindestens einem der Ansprüche 1 oder 2,
   **gekennzeichnet dadurch,**

**dass** logische Abtastfenster, die aus den jeweils ein Wavelet auswertenden Sensorelementen des Spektrometers - also auf der Spektrometerachse - gebildet werden, im Auslesevorgang für auf der spektralen Achse driftende oder springende Wavelets diesen Wavelets hochdynamisch elektronisch nachgeführt werden.

**4.** Interterometrisches, konfokales Verfahren für optische Datenspeicher nach mindestens einem der Ansprüche 1 bis 3, **gekennzeichnet dadurch,**
**dass** die Signalamplitude von Wavelets zur Gewinnung digitaler Daten ausgewertet wird.

**5.** Interferometrisches, konfokales Verfahren für optische Datenspeicher nach mindestens einem der Ansprüche 1 bis 4, **gekennzeichnet dadurch,**
**dass** in mindestens einem Arm des Interferometers durch Dispersion und /oder Diffraktion der optische Gangunterschied vorbestimmt wellenlängenabhängig gemacht ist, um die Mittenfrequenz der Wavelets zu beeinflussen.

**6.** Interferometrische konfokale Anordnung zum Lesen für optische Datenspeicher mit
einem Interferometer und mit
zumindest einer Multiwellenlängen-Quelle (1, 1a) elektromagnetischer Strahlung und mit
mikroskopischer Abbildung des Inneren des Volumenspeichers mittels Fokussier-Systems, welches im interferometrischen Strahlengang angeordnet ist, auf einen gerasterten Empfänger (11) elektromagnetischer Strahlung, wobei
das Interferometer mit einer chromatisch-konfokalen Anordnung im Abbildungsstrahlengang des Fokussier-Systems gekoppelt ist, wobei
dem gerasterten Empfänger (11) ein Spektrometer (100) vorgeordnet ist, **dadurch gekennzeichnet, daß**
im Referenzstrahlengang eine gezielte Beeinflussung des optischen Gangunterschiedes in Abhängigkeit von der Wellenlänge im Interferometer genutzt wird.

**7.** Interferometrische konfokale Anordnung nach Anspruch 6, wobei die Anordnung ausgelegt ist, daß im Interferometer bei einem optischen Gangunterschied ungleich Null gearbeitet wird.

**8.** Interferometrische konfokale Anordnung nach Anspruch 6 oder 7, wobei die Anordnung ausgelegt ist, daß bei einem reflektierenden Bereich bzw. Dot im Speichermedium im Gegensatz zu einem Pit mindestens ein Wavelet über der spektralen Achse des Spektrometers erzeugt wird.

**9.** Interferometrische konfokale Anordnung für optische Datenspeicher nach einem der Ansprüche 6 bis 8, **gekennzeichnet dadurch,**
**dass** das Interferometer als Zweistrahl-Interferometer ausgebildet ist.

**10.** Interferometrische konfokale Anordnung für optische Datenspeicher nach mindestens einem der Ansprüche 6 bis 9, **gekennzeichnet dadurch,**
**dass** im Fokussier-System mindestens eine diffraktiv-optische Zonenlinse (5, 55) angeordnet ist.

**11.** Interferometrische konfokale Anordnung für optische Datenspeicher nach mindestens einem der Ansprüche 6 bis 10, **gekennzeichnet dadurch,**
**dass** die diffraktiv-optische Zonenlinse (5, 55) in der Pupille des Fokussier-Systems angeordnet ist, welche sich in der Fourier-Ebene des Fokussier-Objektivs (6, 12, 12b) befindet.

**12.** Interferometrische konfokale Anordnung für optische Datenspeicher nach Anspruch 11, **gekennzeichnet dadurch,**
**dass** das Interferometer als fasergekoppeltes Interferometer ausgebildet ist.

**13.** Interferometrische konfokale Anordnung für optische Datenspeicher nach mindestens einem der Ansprüche 11 oder 12, **gekennzeichnet dadurch,**
**dass** das Interferometer als Linnik-Interferometer oder als Mach-Zehnder-Interferometer ausgebildet ist.

**14.** Interferometrische konfokale Anordnung für optische Datenspeicher nach mindestens einem der Ansprüche 11 oder 12, **gekennzeichnet dadurch,**
**dass** das Interferometer als Common-path-Interferometer ausgebildet ist.

**15.** Interferometrische konfokale Anordnung für optische Datenspeicher nach Anspruch 14, **gekennzeichnet dadurch,** **dass** das Interferometer als Mirau-Interferometer ausgebildet ist.

**16.** Interferometrische konfokale Anordnung für optische Datenspeicher nach Anspruch 14, **gekennzeichnet dadurch,** **dass** das Interferometer als Fizau-Interferometer ausgebildet ist.

**17.** Interferometrische konfokalen Anordnung für optische Datenspeicher nach mindestens einem der Ansprüche 8 bis 16, **gekennzeichnet dadurch,** **dass** dem Interferometer mindestens ein fasergekoppeltes Zeilen-Spektrometer (10, 11) nachgeordnet ist.

**18.** Interferometrische konfokale Anordnung für optische Datenspeicher nach mindestens einem der Ansprüche 8 bis 17, **gekennzeichnet dadurch,** **dass** ein Retroreflektor im Referenzstrahlengang des Interferometers in seiner axialen Position feinfühlig regelbar ausgebildet ist, um den optischen Gangunterschied im Interferometer stets etwas von null verschieden einzustellen im Bezug auf die Tiefe der Schichten eines ausgewählten Paketes.

**19.** Interferometrische konfokale Anordnung für optische Datenspeicher nach Anspruch 18, **gekennzeichnet dadurch,** **dass** der Retroreflektor als Tripelspiegelreflektor (116) ausgebildet ist.

**20.** Interferometrische konfokale Anordnung für optische Datenspeicher nach mindestens einem der Ansprüche 8 bis 19, **gekennzeichnet dadurch,** **dass** mindestens ein optisches Element im Referenzstrahlengang mit dispersivem Material angeordnet ist.

**21.** Interferometrische konfokale Anordnung für optische Datenspeicher nach Anspruch 20, **gekennzeichnet dadurch,** **dass** das optische Element mit dispersivem Material im kollimierten Referenzstrahlengang als eine Planparallelplatte (117) ausgebildet ist.

**22.** Interferometrische konfokale Anordnung für optische Datenspeicher nach Anspruch 19, **gekennzeichnet dadurch,** **dass** im kollimierten Referenzstrahlengang ein Diffraktionsmodul mit Gittern angeordnet ist.

**23.** Interferometrische konfokale Anordnung für optische Datenspeicher nach Anspruch 22, **gekennzeichnet dadurch,** **dass** das Diffraktionsmodul mittels zwei oder auch vier baugleicher und sämtlich parallel zueinander angeordneter Phasengitter (118) aufgebaut ist.

**24.** Interferometrische konfokale Anordnung für optische Datenspeicher nach Anspruch 23, **gekennzeichnet dadurch,** **dass** die Phasengitter (118) als Phase-mostly SLMs ausgebildet und in ihren Gitterparametern elektronisch steuerbar ausgebildet sind.

**25.** Verwendung eines Datenspeichers zum Lesen von Daten, wobei das Lesen der Daten mittels einer interferometrischen konfokalen Anordnung gemäß einem der Ansprüche 6 bis 24 erfolgt , und wobei der Datenspeicher mit einem chromatisch-konfokalen Schreibkopf und/oder mit einem fasergekoppelten Multiwellenlängen-Laser- und/oder einer fasergekoppelten und/oder schaltbaren Multi-Superlumineszenz-Dioden-Lichtquelle in mehreren Schichten gleichzeitig und/oder in einem großen Tiefenbereich im unstrukturierten Speichervolumen beschrieben wird.

**26.** Verwendung eines Datenspeichers zum Speichern und/oder Lesen von Daten nach Anspruch 25, mittels schneller optischer Schalter, die im Schreibvorgang das Spektrum der Schreibstrahlung sehr schnell anpassen.

**Claims**

1.  An interferometric, confocal method of reading optical data memories, comprising
    at least one multi-wavelength source (1, 1a) of electromagnetic radiation,
    an interferometer, and
    microscopic imaging of the interior of the bulk memory by means of a focusing system onto a screened receiver (11) of electromagnetic radiation,
    wherein
    a chromatic confocal microscopic technique is procedurally combined with a spectral two-beam interferometry such that
    a spectrometer (100) is arranged upstream of the screened receiver (11), and
    the interferometer works with an optical path difference unequal zero, and
    in a reflecting area in the storage medium (108) at least one wavelet is generated over the spectral axis of the spectrometer (100), the reflecting area representing a dot in contrast to a pit, **characterized in that** a wavelength dependency over the path difference is set such that, with the respective wavelength, it results in an overall hardly changing variation of the frequency of the wavelets on the spectrometer axis.

2.  The interferometric, confocal method for optical data memories according to claim 1,
    **characterized in that**
    focuses are formed by longitudinal chromatic aberration, or chromatic depth resolution, at different depths of the storage medium (108), wherein the spherical aberration is made to a minimum for each focus of any arbitrary wavelength in the spectral range used.

3.  The interferometric, confocal method for optical data memories according to at least one of claims 1 or 2,
    **characterized in that**
    logical scan windows formed from the sensor elements of the spectrometer, which evaluate a wavelet each, - i.e. on the spectrometer axis - are electronically tracked to said wavelets in a highly dynamic manner in the read-out process for wavelets drifting or jumping on the spectral axis.

4.  The interferometric, confocal method for optical data memories according to at least one of claims 1 to 3,
    **characterized in that**
    the signal amplitude of wavelets is evaluated in order to obtain digital data.

5.  The interferometric, confocal method for optical data memories according to at least one of claims 1 to 4,
    **characterized in that**
    in at least one arm of the interferometer, by dispersion and/or differaction the optical path difference is made wavelength-dependent in a predetermined manner in order to influence the center frequency of the wavelets.

6.  An interferometric, confocal assembly of reading optical data memories, comprising
    an interferometer, and
    at least one multi-wavelength source (1, 1 a) of electromagnetic radiation,
    microscopic imaging of the interior of the bulk memory by means of a focusing system, which is arranged in the interferometric beam path, onto a screened receiver (11) of electromagnetic radiation,
    wherein
    the interferometer is coupled to a chromatic confocal assembly in the imaging beam path of the focusing system,
    wherein
    a spectrometer (100) is arranged upstream of the screened receiver (11), **characterized in that**
    in the reference beam path, a targeted influencing of the optical path difference is used depending on the wavelength in the interferometer.

7.  The interferometric, confocal assembly according to claim 6, wherein the assembly is designed such that the interferometer works with an optical path difference unequal zero.

8.  The interferometric, confocal assembly according to claim 6 or 7, wherein the assembly is designed such that in a reflecting area or dot, in the storage medium, in contrast to a pit, at least one wavelet is generated over the spectral axis of the spectrometer.

9.  The interferometric, confocal assembly for optical data memories according to one of claims 6 to 8,

**characterized in that**
the interferometer is formed as a two-beam interferometer.

10. The interferometric, confocal assembly for optical data memories according to at least one of claims 6 to 9,
**characterized in that**
at least one diffractive optical zone lens (5, 55) is arranged in the focusing system.

11. The interferometric, confocal assembly for optical data memories according to at least one of claims 6 to 10,
**characterized in that**
the diffractive optical zone lens (5, 55) is arranged in the pupil of the focusing system, which is located in the Fourier plane of the focusing objective (6, 12, 12b).

12. The interferometric, confocal assembly for optical data memories according to claim 11,
**characterized in that**
the interferometer is formed as a fiber-coupled interferometer.

13. The interferometric, confocal assembly for optical data memories according to at least one of claims 11 or 12,
**characterized in that**
the interferometer is formed as a Linnik interferometer or as a Mach-Zehnder interferometer.

14. The interferometric, confocal assembly for optical data memories according to at least one of claims 11 or 12,
**characterized in that**
the interferometer is formed as a common-path interferometer.

15. The interferometric, confocal assembly for optical data memories according to claim 14,
**characterized in that**
the interferometer is formed as a Mirau interferometer.

16. The interferometric, confocal assembly for optical data memories according to claim 14,
**characterized in that**
the interferometer is formed as a Fizau interferometer.

17. The interferometric, confocal assembly for optical data memories according to at least one of claims 8 to 16,
**characterized in that**
at least one fiber-coupled line spectrometer (10, 11) is arranged downstream of the interferometer.

18. The interferometric, confocal assembly for optical data memories according to at least one of claims 8 to 17,
**characterized in that**
a retroreflector is formed to be controllable in a sensitive manner in its axial position in the reference beam path of the interferometer in order to always adjust the optical path difference in the interferometer to be different from zero with respect to the depth of the layers of a selected packet.

19. The interferometric, confocal assembly for optical data memories according to claim 18,
**characterized in that**
the retroreflector is formed as a triple-mirror reflector (116).

20. The interferometric, confocal assembly for optical data memories according to at least one of claims 8 to 19,
**characterized in that**
at least one optical element is arranged in the reference beam path with dispersive material.

21. The interferometric, confocal assembly for optical data memories according to claim 20,
**characterized in that**
the optical element with dispersive material in the collimated reference beam path is formed as plane-parallel plate (117).

22. The interferometric, confocal assembly for optical data memories according to claim 19,
**characterized in that**
a diffraction module with gratings is arranged in the collimated reference beam path.

**23.** The interferometric, confocal assembly for optical data memories according to claim 22,
**characterized in that**
the diffraction module is constructed by means of two or four structurally similar phase gratings (118) all arranged parallel to each other.

**24.** The interferometric, confocal assembly for optical data memories according to claim 23,
**characterized in that**
the phase gratings (118) are formed as phase-mostly SLMs and are formed to be electronically controllable with respect to their grating parameters.

**25.** A use of a data memory for reading data, wherein the data are read by means of an interferometric, confocal assembly according to at least one of claims 6 to 24, and wherein the data memory is recorded in several layers at the same time and/or in a large depth area in the non-structured storage volume by means of a chromatic confocal write head and/or a fiber-coupled multi-wavelength laser and/or a fiber-coupled and/or a switchable multi-superluminescence diode light source.

**26.** The use of a data memory for storing and/or reading data according to claim 25 by means of fast optical switches very quickly adapting the spectrum of writing radiation in the write process.

**Revendications**

**1.** Procédé interférométrique confocal pour la lecture de supports de données optiques, comprenant :

au moins une source de longueurs d'onde multiples (1, 1a) à rayonnement électromagnétique,
un interféromètre et
une représentation microscopique de l'intérieur de la mémoire de volume sur un récepteur à trame (11) à rayonnement électromagnétique au moyen du système de focalisation,
dans lequel
une technique microscopique chromatique confocale est reliée, en ce qui concerne le procédé, à une interférométrie spectrale à deux rayons, de telle sorte que
un spectromètre (100) est agencé en amont du récepteur à trame (11), et
le travail est effectué dans l'interféromètre pour une différence optique des chemins qui diffère de zéro, et
en cas d'une zone réfléchissante dans le support de mémoire (108), au moins une ondelette est générée au-dessus de l'axe spectral du spectromètre (100), sachant que la zone réfléchissante représente une bossette (« dot ») contrairement à une fossette (« pit »), **caractérisé en ce qu'**une dépendance de la longueur d'onde est ajustée au moyen de la différence des chemins de telle sorte que celle-ci fournit avec la longueur d'onde respective une variation de la fréquence des ondelettes, se modifiant globalement peu, sur l'axe du spectromètre.

**2.** Procédé interférométrique confocal pour des mémoires de données optiques selon la revendication 1,
**caractérisé en ce que**,
suite à une aberration longitudinale chromatique, ou à une fission chromatique en profondeur, des foyers sont réalisés à des profondeurs différentes du support de mémoire (108), sachant que l'aberration sphérique est faite à un minimum pour chaque foyer de chaque longueur d'onde quelconque dans la zone spectrale utilisée.

**3.** Procédé interférométrique confocal pour des mémoires de données optiques selon au moins une des revendications 1 ou 2,
**caractérisé en ce que**
des fenêtres d'exploration logiques qui sont formées à partir des éléments de capteur évaluant respectivement une ondelette - c'est-à-dire sur l'axe du spectromètre - sont guidées d'une manière électronique et hautement dynamique pendant l'opération d'extraction par lecture pour les ondelettes qui dérivent ou qui sautent sur l'axe spectral de ces ondelettes.

**4.** Procédé interférométrique confocal pour des mémoires de données optiques selon au moins une des revendications 1 à 3,
**caractérisé en ce que**
l'amplitude de signal des ondelettes est évaluée afin de gagner des données numériques.

**5.** Procédé interférométrique confocal pour des mémoires de données optiques selon au moins une des revendications 1 à 4,
**caractérisé en ce que**
la différence optique des chemins est faite d'une manière prédéterminée et en fonction de la longueur d'onde dans au moins une branche de l'interféromètre par dispersion et/ou par diffraction pour influencer sur la fréquence moyenne des ondelettes.

**6.** Système interférométrique confocal pour la lecture de supports de données optiques, comprenant :
un interféromètre et
au moins une source de longueurs d'onde multiples (1, 1a) à rayonnement électromagnétique, et
une représentation microscopique de l'intérieur de la mémoire de volume sur un récepteur à trame (11) à rayonnement électromagnétique au moyen du système de focalisation, lequel est agencé dans le chemin interférométrique de rayon,
dans lequel
l'interféromètre est accouplé à un système chromatique confocal dans le chemin de rayon de la représentation du système de focalisation, et dans lequel
un spectromètre (100) est agencé en amont du récepteur à trame (11), **caractérisé en ce que**
une influence ciblée de la différence optique des chemins est exploitée dans le chemin du rayon de référence en fonction de la longueur d'onde dans l'interféromètre.

**7.** Système interférométrique confocal selon la revendication 6, dans lequel le système est conçu de telle sorte qu'un travail est effectué dans l'interféromètre pour une différence optique de chemin qui diffère de zéro.

**8.** Système interférométrique confocal selon l'une ou l'autre des revendications 6 et 7, dans lequel le système est conçu de telle sorte que, en cas d'une zone réfléchissante ou d'une bossette (« dot ») dans le support de mémoire, contrairement à une fossette (« pit »), au moins une ondelette est générée au-dessus de l'axe spectral du spectromètre.

**9.** Système interférométrique confocal pour des mémoires de données optiques selon au moins une des revendications 6 à 8,
**caractérisé en ce que**
l'interféromètre est réalisé comme interféromètre à deux rayons.

**10.** Système interférométrique confocal pour des mémoires de données optiques selon au moins une des revendications 6 à 9,
**caractérisé en ce que**
au moins une lentille de zone optique à diffraction (5, 55) est agencée dans le système de focalisation.

**11.** Système interférométrique confocal pour des mémoires de données optiques selon au moins une des revendications 6 à 10,
**caractérisé en ce que**
la lentille de zone optique à diffraction (5, 55) est agencée dans la pupille du système de focalisation, laquelle se trouve dans le plan de Fourier de l'objectif de focalisation (6, 12, 12b).

**12.** Système interférométrique confocal pour des mémoires de données optiques selon la revendication 11,
**caractérisé en ce que**
l'interféromètre est réalisé comme interféromètre couplé à des fibres.

**13.** Système interférométrique confocal pour des mémoires de données optiques selon au moins une des revendications 11 ou 12,
**caractérisé en ce que**
l'interféromètre est réalisé comme interféromètre du type « Linnik » ou comme interféromètre du type « Mach-Zehnder ».

**14.** Système interférométrique confocal pour des mémoires de données optiques selon au moins une des revendications 11 ou 12,
**caractérisé en ce que**
l'interféromètre est réalisé comme interféromètre du type « à chemin commun » (« common path »).

**15.** Système interférométrique confocal pour des mémoires de données optiques selon la revendication 14,
**caractérisé en ce que**
l'interféromètre est réalisé comme interféromètre du type « Mirau ».

**16.** Système interférométrique confocal pour des mémoires de données optiques selon la revendication 14,
**caractérisé en ce que**
l'interféromètre est réalisé comme interféromètre du type « Fizau ».

**17.** Système interférométrique confocal pour des mémoires de données optiques selon au moins une des revendications 8 à 16,
**caractérisé en ce que**
au moins un spectromètre à lignes (10, 11) couplé à des fibres est agencé en aval de l'interféromètre.

**18.** Système interférométrique confocal pour des mémoires de données optiques selon au moins une des revendications 8 à 17,
**caractérisé en ce que**
un rétro-réflecteur est réalisé avec possibilité de régulation de manière sensible dans le chemin du rayon de référence de l'interféromètre dans sa position axiale pour ajuster la différence optique des chemins toujours sur une valeur qui diffère quelque peu de zéro, en référence à la profondeur des couches d'un paquet sélectionné.

**19.** Système interférométrique confocal pour des mémoires de données optiques selon la revendication 18,
**caractérisé en ce que**
le rétro-réflecteur est réalisé comme réflecteur à triple miroir (116).

**20.** Système interférométrique confocal pour des mémoires de données optiques selon au moins une des revendications 8 à 19,
**caractérisé en ce que**
au moins un élément optique est agencé dans le chemin du rayon de référence avec de la matière dispersive.

**21.** Système interférométrique confocal pour des mémoires de données optiques selon la revendication 20,
**caractérisé en ce que**
l'élément optique est réalisé avec de la matière dispersive dans le chemin collimaté du rayon de référence comme une plaquette parallèle au plan (117).

**22.** Système interférométrique confocal pour des mémoires de données optiques selon la revendication 19,
**caractérisé en ce que**
un module de diffraction avec des grilles est agencé dans le chemin collimaté du rayon de référence.

**23.** Système interférométrique confocal pour des mémoires de données optiques selon la revendication 22,
**caractérisé en ce que**
le module de diffraction est établi au moyen de deux, ou aussi de quatre, réseaux de phase (118) de construction identique et tous agencés en parallèle les uns aux autres.

**24.** Système interférométrique confocal pour des mémoires de données optiques selon la revendication 23,
**caractérisé en ce que**
les réseaux de phase (118) sont réalisés comme MSL (modulateurs spatiaux de lumière) majoritairement en phase (« phase-mostly SLM ») et sont réalisés de manière à pouvoir être commandés électroniquement dans leurs paramètres de réseau.

**25.** Utilisation d'une mémoire de données pour la lecture de données au moyen d'un système interférométrique confocal conformément à l'une des revendications 6 à 24, dans lequel la lecture des données a lieu, et dans lequel la mémoire de données est décrite avec une tête de lecture chromatique confocale et/ou avec un laser à longueur d'onde multiples couplé à des fibres et/ou avec une source de lumière couplée à des fibres et/ou comportant des diodes multiples super luminescentes commutables, simultanément dans plusieurs couches et/ou dans une grande zone en profondeur, dans la mémoire de volume non structurée.

**26.** Utilisation d'une mémoire de données pour la mémorisation et/ou la lecture de données selon la revendication 25, au moyen de commutateurs optiques rapides qui adaptent très rapidement le spectre du rayonnement d'écriture pendant l'opération d'écriture.

Fig. 1

**Fig. 2a**

confocal
discrimination

red

blue

**Fig. 2**

**Fig. 2b**

Fig. 3

Fig. 4

**EP 1 846 923 B1**

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- US 5784352 A
- US 5565986 A

### In der Beschreibung aufgeführte Nicht-Patentliteratur

- Optical Coherence Tomography for High-Density Data Storage. **STEPHEN R. CHINN ; ERIC A. SWANSON.** Handbook of Optical Coherence Tomography. Marcel Dekker, Inc, 2002, 385-420
- *konfokal-interferometrisches Verfahren eingesetzt wird,* vol. 1, 409
- *konfokalinterferometrischer Verfahren,* vol. 1, 386-389
- **M. W. LINDNER ; P. ANDRETZKY ; F. KIESEWETTER ; G. HÄUSLER.** *Spectral Radar: Optical Coherence tomography in the Fourier Domain,* vol. 1, 335-345
- *Sensitivität der konfokalinterferometrischen Verfahren erreicht,* vol. 1, 409
- **VON H. J. TIZIANI ; H.-M. UHDE.** Fachartikel Three-dimensional image sensing by chromatic confocal microscopy. *Applied Optics,* April 1994, vol. 33 (1), 1838-1843
- **VON PAVEL PAVLICEK ; GERD HÄUSLER.** Veröffentlichung ''Accurate fiber-optic sensor for measurement of the distance based on white-light interferometry with dispersion''. *ICO Tokyo,* 15. Juli 2004